# EUROPEAN PATENT APPLICATION

(11) **EP 4 699 988 A1**
(43) Date of publication of application: **25.02.2026**
(21) Application number: 24792717.1
(22) Date of filing: 18.04.2024
(51) Int. Cl.: C02F 1/46, B01D 53/14, B01D 53/32, B01J 19/08

(54) **CARBON DIOXIDE REDUCTION DEVICE**

(30) Priority: 18.04.2023 WO PCT/JP2023/015502
(71) Applicant: Nanoseed Inc., Saku-shi, Nagano 385-0051 (JP)
(72) Inventor: HOSOGAYA, Takehiko, Saku-shi, Nagano 385-0051 (JP); TASHIRO, Satoshi, Saku-shi, Nagano 385-0051 (JP)
(74) Representative: Gill Jennings & Every LLP
(86) International application number: PCT/JP2024/015376
(87) International publication number: WO 2024/219445

(57) **Abstract**

In order to provide a practical technology for reducing carbon dioxide in a space, provided is a carbon dioxide reduction device including a container (10) configured to store an aqueous solution (50) of sodium chloride at the bottom. The container (10) has an intake port (11) and an exhaust port (13), and includes therein a needle-shaped electrode (21), a planar electrode (22), and a tubular electrode (23). A pulsed voltage of 8,000 V is applied between the needle-shaped electrode (21) and the planar electrode (22) and between the needle-shaped electrode (21) and the tubular electrode (23) so that the former becomes negative. The aqueous solution (50) sucked up from the bottom of the container (10) spreads in a layered shape on the planar electrode (22) to be exposed to corona discharge.

## Description

### Technical Field

The present invention relates to a technology for reducing carbon dioxide (CO₂) in a partitioned space, for example, a room in a house, such as a living room, or the interior of a vehicle, such as an automobile.

### Background Art

It has been well known that it is preferred to reduce the amount of carbon dioxide in a predetermined space or to decrease the concentration of carbon dioxide. The space in this case means, for example, a space separated from the outside in real estate (an office in an office building, a classroom in a school, and the like) or an indoor space, which is separated from the outside, of an automobile, an airplane, a ship, or the like. When the concentration of carbon dioxide in a room is increased, the physical conditions of people in the room may be influenced, and the efficiency of work and study may be decreased.

In view of the foregoing, for example, even in Building Environmental Sanitation Management Standards stipulated by the Ministry of Health, Labour and Welfare of Japan, standards for the preferred concentration of carbon dioxide in an indoor environment have been established.

### Summary of Invention

### Technical Problem

As a method of decreasing the concentration of carbon dioxide, ventilation has been generally adopted. However, ventilation decreases the efficiency of cooling and heating in a space, and hence there is a problem in terms of energy efficiency or cost.

In addition, when ventilation is automatically performed, such problem does not occur. However, when ventilation is manually performed, ventilation may be frequently forgotten, resulting in ventilation not being performed.

Although various technologies for reducing carbon dioxide in a certain space or decreasing the concentration of carbon dioxide theoretically exist, no practical technologies exist, and at least products for such purposes are not currently available.

An object of the present invention is to provide a practical technology for reducing carbon dioxide in a space.

### Solution to Problem

The present invention for solving the above-mentioned problems has been made under the following circumstances.

The applicant of the present application has filed a patent application for an invention related to a device that gasifies an aqueous solution containing sodium ions and releases the ions, and has already obtained a patent (Patent Literature 1: JP 5819560 B1). In addition, the applicant of the present application has been manufacturing and selling an ion release device that is a product based on the invention of the obtained patent application for some time.

The ion release device is generally configured as described below.

The ion release device includes a container, which is designed to store an aqueous solution containing sodium ions at the bottom, and which includes an intake port that is an opening for introducing air into the inside of the container and an exhaust port for discharging the air from the inside of the container. In the container, there are arranged: a first cathode that is an electrode provided between the intake port and the bottom of the container; and a first anode that is an electrode, to which a positive voltage relative to the first cathode is applied, which is paired with the first cathode, and which is positioned on a lower side of the first cathode.

The ion release device includes a power supply device, and the power supply device applies a voltage having a constant potential between the first cathode and the first anode, which is sufficiently high for generating corona discharge therebetween.

When a voltage that is sufficiently large for generating corona discharge is applied between a pair of the first cathode and the first anode, an ion wind is generated in the air entering the container from the intake port. The direction of the ion wind is a direction directed from the first cathode to the first anode, and hence the ion wind flows downward in the container. As a result, the ion wind and the air collide with the aqueous solution stored at the bottom of the container. Thus, part of the aqueous solution is transpired, and a large number of fine particles of the aqueous solution that are negatively charged are generated from the aqueous solution. The negatively charged particles are discharged from the exhaust port of the container and released into, for example, a space in a predetermined room.

When the negatively charged particles of the aqueous solution are released into a space in a room or the like, space disinfection is achieved.

That is, the ion release device according to the patent application previously filed by the applicant of the present application is a device intended for space disinfection.

Incidentally, in the ion release device described in Patent Literature 1, the detailed mechanism by which the negatively charged fine particles of the aqueous solution are generated from the aqueous solution was not well understood at least at the time of the filing of Patent Literature 1. In other words, it was not clarified what the negatively charged fine particles of the aqueous solution released from the ion release device are like, for example, whether the particles of only one kind are present or whether a plurality of kinds of particles having different properties are present.

In view of the foregoing, in order to further improve the ion release device, the applicant of the present application has conducted an analysis to determine what phenomena or chemical reactions occur in the ion release device and what the fine particles consequently released from the ion release device are like.

As a result, the fact that the substance released from the ion release device contains a trace amount of sodium carbonate (Na₂CO₃) and sodium bicarbonate (NaHCO₃) has been recognized.

Here, the applicant has noticed something. Sodium carbonate and sodium bicarbonate contain carbon (C) in common.

However, any carbon-containing substances are not originally present in the aqueous solution of the ion release device. Thus, it is conceived that this carbon originates from substances contained in the air taken into the ion release device. In effect, except for carbon monoxide substantially in a negligible amount, the only carbon present in the air is that in carbon dioxide.

Accordingly, at least part of a process by which the above-mentioned ion release device releases the negatively charged particles of the aqueous solution into the space involves fixing carbon in carbon dioxide to sodium carbonate and sodium bicarbonate, or reducing carbon dioxide.

That is, it has been found that the above-mentioned ion release device also functions as a carbon dioxide reduction device.

However, when the related-art ion release device is operated, although sodium carbonate and sodium bicarbonate are contained in the released substances, the amounts thereof are extremely small. This means that the amount of carbon dioxide to be reduced is also extremely small.

Thus, when an attempt is made to utilize the related-art ion release device as a carbon dioxide reduction device intended to reduce carbon dioxide in the air, the efficiency is too low to be practical.

In view of the foregoing, the inventors of the present application have further analyzed and studied the ion release device, and as a result, have obtained the following idea. That is, in the related-art ion release device, when the downward ion wind generated by the corona discharge generated between the first cathode and the first anode is caused to collide with the aqueous solution, there is a high possibility that there occurs a reaction in which carbon contained in carbon dioxide in the air is utilized to generate sodium carbonate and sodium bicarbonate (hereinafter sometimes referred to as "specific reaction"). When the aqueous solution can be positioned in the corona discharge, the specific reaction may be induced more effectively.

Then, when a prototype ion release device in which the aqueous solution can be positioned in the corona discharge has been produced, and the effect of carbon dioxide reduction has been tested. As a result, although the detailed mechanism has remained unclear, the effect of carbon dioxide reduction has been significantly improved.

The present invention has been made under those circumstances.

The present invention that has been made under the above-mentioned circumstances is as described below.

According to the present invention, there is provided a carbon dioxide reduction device, including: an aqueous solution tank configured to store an aqueous solution containing sodium ions; a container including: an intake port that is an opening through which air is allowed to be introduced into an inside of the container; and an exhaust port that is an opening through which the air is allowed to be discharged from the inside of the container; a first cathode that is an electrode provided in the container; a first anode that is an electrode provided in the container, to which a positive voltage relative to the first cathode is to be applied, which is paired with the first cathode, and which has an electrode surface having a planar spread facing the first cathode; a power supply device configured to apply a voltage having a potential difference that generates corona discharge between the first cathode and the first anode; and a supply member configured to supply the aqueous solution from the aqueous solution tank to the electrode surface, wherein the aqueous solution spread in a film shape on the electrode surface is exposed to the corona discharge generated between the first cathode and the first anode through application of the voltage by the power supply device.

The carbon dioxide reduction device includes the container. The container is airtight except for the intake port and the exhaust port. The carbon dioxide reduction device includes the aqueous solution tank that stores an aqueous solution containing sodium ions. The aqueous solution tank may be present inside or outside the container. The container also includes: the intake port that is the opening for introducing air into the inside of the container; and the exhaust port that is the opening for discharging the air from the inside of the container. In the container, the first cathode, and the first anode, to which a positive voltage relative to the first cathode is to be applied, are provided. The first anode has the planar electrode surface facing the first cathode.

The carbon dioxide reduction device includes the supply member that supplies the aqueous solution from the aqueous solution tank to the electrode surface. The aqueous solution conveyed by the supply member has a film shape at least in a predetermined range on the electrode surface.

The carbon dioxide reduction device also includes the power supply device that applies a voltage having a potential difference that generates corona discharge between the first cathode and the first anode. When the power supply device applies a voltage between the first cathode and the first anode, corona discharge is generated therebetween. An ion wind generated by the corona discharge is directed from the first cathode to the first anode, and hence the ion wind and the air accelerated by the ion wind both collide with the aqueous solution placed on the electrode surface of the first anode. As a result, there occurs a reaction in which carbon contained in carbon dioxide in the air is utilized to generate sodium carbonate and sodium bicarbonate, that is, a specific reaction.

As described above, the first anode has the planar electrode surface facing the first cathode. Thus, the corona discharge is generated between the electrode surface of the first anode and the first cathode. As a result, in the carbon dioxide reduction device of the present application, the aqueous solution positioned on the electrode surface of the first anode is positioned in a space in which the corona discharge is generated. That is, in the carbon dioxide reduction device of the present application, the aqueous solution on the electrode surface of the first anode is exposed to the corona discharge generated between the first cathode and the first anode.

When the aqueous solution is exposed to the corona discharge, a further specific rection may occur. Alternatively, when the aqueous solution is exposed to the corona discharge, the above-mentioned specific rection that occurs due to the collision between the ion wind and the aqueous solution may be further accelerated. In any case, when the aqueous solution is exposed to the corona discharge, the specific reaction can be induced more as compared to the related art. Although the applicant has stated that the detailed mechanism has remained unclear, the applicant presumes that the following phenomena occur when the aqueous solution is exposed to the corona discharge, to thereby accelerate the specific reaction.

It is presumed that, when the aqueous solution is exposed to the corona discharge, there occurs a reaction in which water (H₂O) in the aqueous solution is ionized into hydrogen ions (H⁺) and hydroxide ions (OH⁻) by the corona discharge. In the aqueous solution, sodium ions (Na⁺) are sufficiently present, and the ionization of water in the aqueous solution results in the generation of a large amount of hydroxide ions, to thereby accelerate the following two chemical reactions. It is presumed that the foregoing is the reason why the specific reaction is accelerated and carbon dioxide is significantly reduced.

2Na⁺+2OH⁻+CO₂→Na₂CO₃+H₂O

Na⁺+OH+CO₂→NaHCO₃

In the carbon dioxide reduction device, the same reaction as that in the ion release device as described in Patent Literature 1 also occurs. That is, this carbon dioxide reduction device causes the reaction in which the ion wind is generated by the corona discharge, and the reaction that occurs due to the collision of the ion wind with the aqueous solution together with the air accelerated by the ion wind. Thus, the carbon dioxide reduction device according to the present application basically maintains the effect of space disinfection of the ion release device. In this sense, the carbon dioxide reduction device according to the present application has the characteristics as a space disinfection device and may also be regarded as a space disinfection device.

As described above, the first cathode and the first anode enable the corona discharge to be generated therebetween.

The first anode has the planar electrode surface facing the first cathode, and the purpose of the foregoing is to form the spread of the aqueous solution having a film shape on the electrode surface. When the spread aqueous solution is exposed to the corona discharge, the specific reaction is accelerated. In addition, when the electrode surface of the first anode has a planar spread, it can be expected that the discharge directed from the first cathode to the first anode is performed toward various parts of the electrode surface. As a result, the specific reaction is accelerated at various positions of the aqueous solution spread on the planar electrode surface, and hence there is a high possibility that the effect of accelerating the specific reaction is increased.

Meanwhile, the first cathode is not required to have an electrode surface, and the shape of the first cathode has a certain degree of freedom. For example, the first cathode may be configured as a needle-shaped electrode protruding toward the electrode surface. When the first cathode is a needle-shaped electrode, the electrode surface of the first anode may be a concave surface recessed with respect to the first cathode (for example, the first cathode that is a needle-shaped electrode). With this configuration, the discharge from the first cathode to the first anode can be relatively uniformly performed with respect to various positions on the electrode surface of the first anode. As a result, the acceleration of the specific reaction can be expected. For example, the electrode surface may be formed into a shape like an inner surface of a pot, which has a circular flat portion at the center thereof, and an outer periphery rising gently from the flat portion.

A plurality of needle-shaped electrodes may be provided as the needle-shaped electrode. In this case, the corona discharge may be generated between the electrode surface and each of distal ends of the plurality of needle-shaped electrodes by the number of the needle-shaped electrodes at most. As a result, the specific reaction is further accelerated.

There is no particular limitation on the relative positional relationship between the first cathode and the first anode.

For example, the corona discharge may be generated in a longitudinal direction by positioning the electrode surface on a lower side of the first cathode. In this case, the electrode surface, for example, becomes horizontal. The longitudinal direction does not exactly mean the vertical direction. This is especially true when a plurality of first cathodes that are needle-shaped electrodes are provided.

The corona discharge may be generated in a lateral direction by positioning the electrode surface on a lateral side of the first cathode. In this case, the electrode surface, for example, becomes vertical. The lateral direction does not exactly mean the horizontal direction. This is especially true when a plurality of first cathodes that are needle-shaped electrodes are provided.

There is no particular limitation on the configuration and arrangement position of the aqueous solution tank as long as the aqueous solution can be stored therein.

For example, irrespective of the positional relationship between the first cathode and the first anode, a predetermined range of the bottom of the container on a lower side of the first cathode and the first anode may be set to the aqueous solution tank. As a result, the vicinity of the bottom of the container can be used as the aqueous solution tank, which can help make the volume of the carbon dioxide reduction device compact and also leads to the reduction in the number of elements.

In addition, irrespective of the positional relationship between the first cathode and the first anode, the aqueous solution tank may be provided outside the container. In this case, it becomes easy to increase the volume of the aqueous solution tank.

As described above, the aqueous solution in the aqueous solution tank is supplied from the aqueous solution tank to the surface of the electrode surface of the first anode by the supply member. The supply member may be formed of, for example, a tube, one end of which is immersed in the aqueous solution tank, and another end of which is extended to the electrode surface or the vicinity thereof, and a pump that sends the aqueous solution from the aqueous solution tank to the surface of the electrode surface through the tube.

Meanwhile, the supply member may include a water absorbing member formed of a water-absorbing material, one end of which is immersed in the aqueous solution tank, and another end of which is extended to the electrode surface or the vicinity thereof, and the aqueous solution in the aqueous solution tank absorbed by the water absorbing member may be supplied to the surface of the electrode surface. Through use of the supply member including the water absorbing member, members required to be supplied with energy from the outside for operation like a pump, can be omitted, and in addition, the use of such supply member leads to the suppression of cost and reduction in failures.

When the water absorbing member is used, the first anode may be formed into a plate shape. In this case, the another end of the water absorbing member may be extended to the back side of the electrode surface of the first anode. When the water absorbing member is extended to the back side of the electrode surface, the first anode may have a hole through which the aqueous solution supplied from the water absorbing member is allowed to pass. In this case, as the hole, one hole may be formed, or a plurality of or a large number of holes may be formed. When there are a large number of holes, for example, when the holes are uniformly present over the entire first anode having a plate shape, it becomes easy to uniformly supply the aqueous solution to the entire electrode surface on an upper side of the first anode, to thereby facilitate the uniform formation of a spread having a film shape of the aqueous solution over the entire electrode surface.

When the first anode has a large number of holes, the first anode may be formed of a metal mesh material. For example, when the first anode is formed of a mesh material in which wires made of a conductive metal are woven vertically and horizontally, it is easy to form the first anode with a large number of holes or to form the upper surface of the first anode into the concave surface as described above.

The water absorbing member may be formed of yarns bundled together with length directions aligned or sponge. When the water absorbing member is formed of yarns, the bundled yarns acquire a water-absorbing property due to the capillary action, and hence the yarns themselves may not have a water-absorbing property. However, the yarns may also be formed of a material having a water-absorbing property. In this case, the absorption of the aqueous solution by the fibers as well as the capillary action cause the aqueous solution stored at the bottom of the container to spontaneously move toward the electrode surface, for example, upward.

The carbon dioxide reduction device of the present application may further include a water-retaining sheet that is a sheet formed of a material having a water-retaining property, the sheet being configured to cover the electrode surface.

When the water-retaining sheet is present, it becomes easy to allow the aqueous solution in a state of permeating the water-retaining sheet, to be present in a film shape in a wide range on the electrode surface. The water-retaining sheet may be formed of, for example, a resin having a water-retaining property or paper.

The first anode may have a water-retaining property. As a result, even without the water-retaining sheet, it becomes easy to allow the aqueous solution to be present in a state of a film shape on the electrode surface of the first anode. Although depending on the perspective, it may be conceived that, in this case, the first anode also serves as the water-retaining sheet. In this case, the aqueous solution may be present in a film shape inside the first anode as well as on the electrode surface of the first anode. However, the fact that the aqueous solution is present in a state of a film shape in a wide range equal to or more than a certain level at least on the electrode surface of the first anode remains unchanged.

In order to impart a water-retaining property to the first anode, for example, the first anode may be formed of a woven fabric or a nonwoven fabric made of carbon fibers that are fibers having conductivity. In addition, through use of conductive sponge, for example, formed into a sheet shape (described later), a water-retaining property can be imparted to the first anode.

The first anode may be formed of conductive sponge that is sponge formed of a material having conductivity, and the electrode surface may be a surface of the conductive sponge.

For example, there exists sponge having a configuration in which small hollow spheres made of carbon atoms are three-dimensionally arranged so that the internal spaces between the spheres adjacent in longitudinal, lateral, and height directions are in communication with each other. Needless to say, carbon has conductivity. Such conductive sponge that is sponge having conductivity may be used as the first anode, and the surface thereof may be used as the electrode surface.

Even when the first anode is formed of conductive sponge, the electrode surface may be formed into the concave surface as described above.

In addition, when the first anode is formed of conductive sponge, the aqueous solution having seeped out to the upper side of the conductive sponge forms an aqueous solution spread on the first anode in a layered shape. Thus, when the first anode is formed of conductive sponge, the water-retaining sheet described above, which is useful for forming the aqueous solution spread in a layered shape on the electrode surface, is no longer required.

When the first anode is formed of conductive sponge, the water absorbing member may be formed of the above-mentioned bundled fibers or sponge. Meanwhile, when the first anode is formed of conductive sponge, the supply member includes water absorbing sponge formed of a material having both a water-absorbing property and conductivity, one end of which is immersed in the aqueous solution tank, and another end of which is extended to the electrode surface or the vicinity thereof, so that the aqueous solution in the aqueous solution tank absorbed by the water absorbing sponge is supplied to the surface of the electrode surface, and the conductive sponge and the water absorbing sponge may also be integrally formed.

When the water absorbing member and the first anode are formed of integrated conductive sponge (more precisely, integrated conductive sponge and water absorbing sponge), the number of elements can be reduced, and hence the configuration of the carbon dioxide reduction device can be simplified. Also in this case, the advantages described above, which are brought about by the fact that the members required to be supplied with energy from the outside can be omitted, are maintained.

The power supply device may be configured to apply a pulsed high voltage of from 30 Hz to 500 Hz between the first cathode and the first anode. When a plurality of needle-shaped electrodes are used as the first cathode, the power supply device normally maintains the plurality of needle-shaped electrodes at the same potential.

The fact that exposing the aqueous solution to the corona discharge accelerates the specific reaction is the finding obtained by the inventors of the present application. In addition, separately from the foregoing, the inventors of the present application have also obtained the finding that the specific reaction occurs most frequently at the moment when a large potential difference occurs between the pair of the first cathode and the first anode (moment (or the time period thereof) when the rise of a graph occurs when the graph is drawn with time on the horizontal axis and potential difference on the vertical axis).

When the voltage applied between the first cathode and the first anode is set to a pulse voltage (pulsed high voltage), the moment when a large potential difference occurs between the first cathode and the first anode can be caused repeatedly by the same number of times as the number of pulses. Along with the foregoing, the amount of the specific reaction that can be induced by the carbon dioxide reduction device can be increased, and in turn, carbon dioxide in the air can be reduced in a large amount.

The lower limit of the frequency of the pulse voltage is set to the above-mentioned value when the voltage applied between the first cathode and the first anode is pulsed because inducing the specific reaction at 30 Hz, that is, 30 times per second increases the effect of carbon dioxide reduction to some degree. Meanwhile, the upper limit of the frequency of the pulse voltage is set to the above-mentioned value because generating pulse voltages having frequencies higher than the above-mentioned value is extremely difficult.

The voltage applied between the first cathode and the first anode is preferably set to from 4,000 V and 11,000 V regardless of whether the voltage is pulsed or not.

The lower limit of the potential of the pulse voltage is set to 4,000 V because, when the potential difference between the first cathode and the first anode is smaller than this value, the discharge quantity at the time of generation of the corona discharge is small, resulting in that there is a risk in that the specific reaction may not sufficiently occur. The term "corona discharge" as used in the present application also encompasses dark current discharge. The upper limit of the potential of the pulse voltage is set to 11,000 V because, when the potential difference between the first cathode and the first anode is larger than this value, the discharge generated between the first cathode and the first anode may become spark discharge accompanied by sparks, resulting in that there is a risk in that power consumption may be increased or severe deterioration of the first cathode, the first anode, or surrounding elements may occur.

The carbon dioxide reduction device of the present invention includes the first cathode and the first anode as described above.

Meanwhile, the present invention may also include a second cathode and a second anode in addition to the first cathode and the first anode.

For example, the carbon dioxide reduction device according to the present invention may further include: a second anode that is an electrode provided in the vicinity of the exhaust port; and a second cathode that is an electrode, to which a negative voltage relative to the second anode is to be applied, which is paired with the second anode, and which is positioned on a center side of the container with respect to the second anode.

In this case, the power supply device may be configured to apply a voltage having a potential difference that generates corona discharge between the second cathode and the second anode, and an ion wind generated by the corona discharge generated between the second cathode and the second anode is discharged from the exhaust port together with air accelerated by the ion wind. As a result, the ion wind generated by the corona discharge generated between the second cathode and the second anode is discharged from the exhaust port together with the air accelerated by the ion wind.

That is, the first cathode and the first anode enable the ion wind and the air to efficiently collide with the aqueous solution, but the second cathode and the second anode each have the function of enabling the ion wind and the air (substances and the like generated by the specific reaction or the like are mixed with the air) to be efficiently discharged from the exhaust port to the outside of the container.

The foregoing also creates a negative pressure in the container to lead to the efficient intake of the air into the container from the intake port and also serves to enable the carbon dioxide reduction device to efficiently reduce carbon dioxide.

Here, the second anode may be an electrode having a cylindrical shape with both ends opened, and may be configured to be fitted into the exhaust port.

For example, when the second anode is formed as an electrode having a cylindrical shape with both ends opened and is further fitted into the exhaust port, the flow of the ion wind in a predetermined direction is allowed to pass through the second anode formed into a cylindrical shape, that is, through the exhaust port. When the second cathode is formed as, for example, a needle-shaped electrode having a length direction parallel to an axis of the second anode formed into a cylindrical shape, and the second cathode is arranged coaxially with the second anode formed into a cylindrical shape, the flow of the ion wind can be, in effect, directed so as to pass through the second anode formed into a cylindrical shape. As a result, the flow of the ion wind naturally passes through the second anode formed into a cylindrical shape, that is, through the exhaust port, and hence exhaust from the container proceeds.

When both the first cathode and the second cathode are formed into one needle-shaped electrode, the first cathode and the second cathode may be a series of needle-shaped electrodes. When the first cathode and the second cathode are integrally formed, the circuit configuration can be simplified.

In this case, the lower side of one needle-shaped electrode extending upward and downward can be set to the first cathode, and the upper side thereof can be set to the second cathode. In this case, the second anode formed into a cylindrical shape with a top and a bottom opened is typically arranged at a position, which is coaxial with the needle-shaped electrode that serves as the first cathode and the second cathode, and which is on the upper side of the needle-shaped electrode.

In the carbon dioxide reduction device of the present application, an aqueous solution containing sodium ions is used. As the aqueous solution, a sodium chlorite aqueous solution or a sodium chloride aqueous solution may be used. In particular, sodium chloride is dietary salt, which is readily available and inexpensive.

### Brief Description of Drawings

FIG. 1 is a sectional view for schematically illustrating the structure of a carbon dioxide reduction device according to a first embodiment;
FIG. 2 is a perspective view of a planar electrode and a water-retaining sheet included in the carbon dioxide reduction device illustrated in FIG. 1;
FIG. 3 is a circuit diagram of a pulse power supply device included in the carbon dioxide reduction device illustrated in FIG. 1;
FIG. 4 is a graph for showing an example of a pulse waveform to be input to a high-voltage power supply device in the carbon dioxide reduction device illustrated in FIG. 1;
FIG. 5 is a sectional view for schematically illustrating the structure of a carbon dioxide reduction device according to Modification Example 1;
FIG. 6(A) is a front view for illustrating the configuration of an electrode body according to one example before being formed into a roll shape; FIG. 6(B) is a front view for illustrating the configuration of an electrode body according to another example before being formed into a roll shape; and FIG. 6(C) is a bottom view for illustrating the configuration of an electrode body formed into a roll shape;
FIG. 7 is a sectional view for schematically illustrating the structure of a carbon dioxide reduction device according to Modification Example 2;
FIG. 8 is a sectional view for schematically illustrating the structure of a carbon dioxide reduction device according to a second embodiment;
FIG. 9 is a sectional view for schematically illustrating the structure of a carbon dioxide reduction device according to Modification Example 3;
FIG. 10 is a sectional view for schematically illustrating the structure of a carbon dioxide reduction device given when the carbon dioxide reduction device according to the first embodiment is modified so that a water-retaining property is imparted to a planar electrode while a water-retaining sheet is omitted;
FIG. 11 is a sectional view for schematically illustrating the structure of a carbon dioxide reduction device given when the carbon dioxide reduction device according to the second embodiment is modified so that a water-retaining property is imparted to a planar electrode while a water-retaining sheet is omitted; and
FIG. 12 is a sectional view for schematically illustrating the structure of a carbon dioxide reduction device given when the carbon dioxide reduction device according to Modification Example 3 is modified so that a water-retaining property is imparted to a planar electrode while a water-retaining sheet is omitted.

### Description of Embodiments

The carbon dioxide reduction devices according to the first and second embodiments and modification examples thereof are described below with reference to the drawings.

In the description of each of the embodiments and modification examples, common elements are denoted by common reference symbols, and common description is omitted in some cases. In addition, each configuration described in each of the embodiments and modification examples is applicable also to each of the embodiments and modification examples unless there is a contradiction.

### <<First Embodiment>>

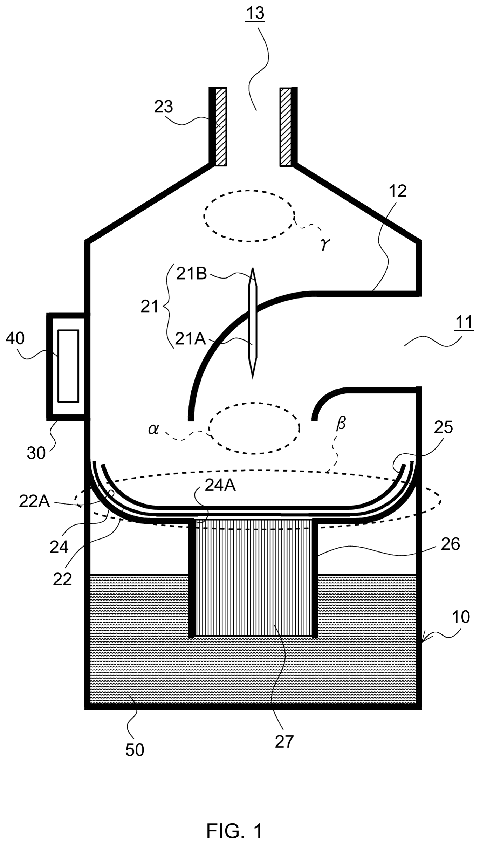

FIG. 1 is a sectional view for schematically illustrating the structure of a carbon dioxide reduction device according to the first embodiment.

The carbon dioxide reduction device according to the first embodiment includes a container 10 as illustrated in FIG. 1. The container 10 is airtight and watertight. Although not limited to the following, in this embodiment, the container 10 has a vertically elongated cylindrical shape. The container 10 may be formed of, for example, a resin or a metal. It is preferred that the metal to be used for the container 10 have no conductivity.

An intake port 11 that is an opening is formed on a side surface, but not limited thereto, of the container 10. The intake port 11 is a hole through which air is allowed to be introduced into the container 10, and the detail of the configuration thereof is not limited as long as the function thereof is ensured. The size and shape of the intake port 11 may be appropriately determined, but in this embodiment, the intake port 11 has a circular shape having an appropriate diameter.

An edge on a proximal end side of a duct 12 that is a tube is connected to an edge of the intake port 11 without any gaps. The duct 12 is a passage that serves to introduce the air sucked from the intake port 11 to an α-range described later. The detail of the configuration thereof is not limited as long as the role thereof can be fulfilled, and the duct 12 is not essentially required. The duct 12 may be formed of an airtight material, for example, the same material as that of the container 10. Although not always required to have the following configuration, in this embodiment, the duct 12 is formed integrally with the container 10 through use of the same material as that of the container 10. The duct 12 is configured to extend horizontally from the proximal end side to an axis of the container 10, but not limited thereto, and be bent vertically downward at a portion of the axis of the container 10. A distal end side of the duct 12 is opened downward because, as described later, an ion wind and air are allowed to easily collide with an aqueous solution formed into a film shape described later. A horizontal portion of the duct 12 on the proximal end side from a portion at which the duct 12 intersects with the axis of the container 10 is set to have a cylindrical shape having an inner diameter that is the same as the diameter of the intake port 11 also because the intake port 11 has a circular shape. A vertical portion of the duct 12 on the distal end side from the portion at which the duct 12 intersects with the axis of the container 10 is set to have a cylindrical shape having a diameter larger than that of the portion on the proximal end side therefrom. However, the duct 12 may have the same sectional shape over the entire length thereof. The opening at a lower end of the vertical portion of the duct 12 has a circular shape. Although not limited to the following, the center of the circular shape is located on the axis of the container 10.

In this embodiment, an exhaust port 13 that is an opening is formed in an upper portion, but not limited thereto, of the container 10. The exhaust port 13 is a hole through which the air or the like in the container 10 is allowed to be discharged to the outside of the container 10, and the detail of the configuration thereof is not limited as long as the function thereof is ensured. The size and shape of the exhaust port 13 may be appropriately determined, but in this embodiment, the exhaust port 13 has a circular shape having an appropriate diameter. A portion connected to the exhaust port 13 in the upper portion of the container 10 is tapered upward under a state like an inverted funnel in this embodiment, but the configuration is not always limited thereto. In addition, although not limited to the following, in this embodiment, the center of the exhaust port 13 having a circular shape is positioned at a position through which the axis of the container 10 passes.

The container 10 includes three electrodes. The electrodes are a needle-shaped electrode 21, a planar electrode 22, and a tubular electrode 23. The needle-shaped electrode 21, the planar electrode 22, and the tubular electrode 23 may each be formed of a metal having conductivity, such as iron or copper.

Among those electrodes, the needle-shaped electrode 21 is supplied with a voltage having a relatively negative potential as compared to the planar electrode 22 and the tubular electrode 23.

The needle-shaped electrode 21 is a needle-shaped electrode extending in an up-and-down direction. Although not limited to the following, in this embodiment, the needle-shaped electrode 21 is provided at a position coaxial with the container 10 so as to penetrate through a portion on an upper side of the duct 12. A portion 21A of the needle-shaped electrode 21 positioned inside the duct 12 corresponds to a first cathode in the present application (this portion is hereinafter sometimes referred to as "first cathode 21A"). A portion 21B of the needle-shaped electrode 21 exposed to an outer side (upper side) of the duct 12 corresponds to a second cathode in the present application (this potion is hereinafter sometimes referred to as "second cathode 21B"). Although not essentially required to have the following configuration, in this embodiment, the first cathode 21A and the second cathode 21B are integrally formed as part and the remaining part of one needle-shaped electrode 21.

Although not limited to the following, in this embodiment, the planar electrode 22 is positioned on a lower side with respect to the needle-shaped electrode 21. The planar electrode 22 is an electrode having an electrode surface 22 with a planar spread facing the first cathode 21A. The planar electrode 22 has a planar electrode surface 22A because the aqueous solution described later is allowed to be present on the electrode surface 22A under a state of having a spread in a film shape.

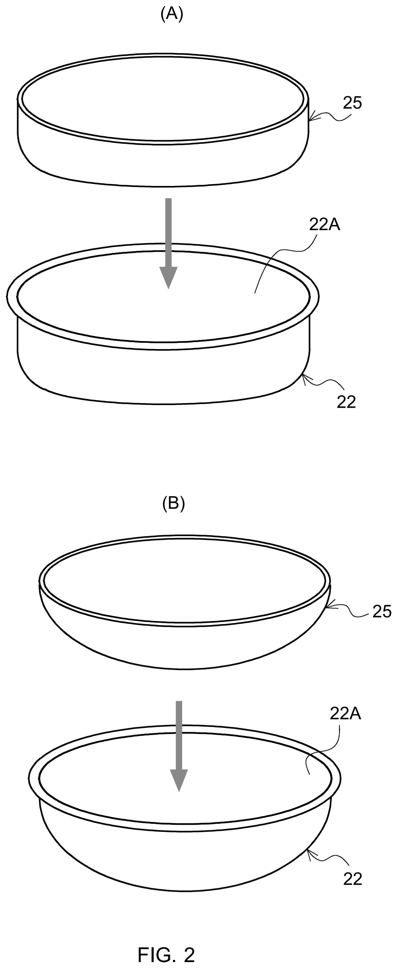

The planar electrode 22 may be configured, for example, so that the electrode surface 22A is horizontal as long as the aqueous solution described later is allowed to be present on the electrode surface 22A under a state of a film shape having a spread (for example, the planar electrode 22 may be a simple plate-shaped body placed horizontally). Although not limited to the following, the planar electrode 22 in this embodiment is configured so that the center of the electrode surface 22A is recessed downward as illustrated in FIG. 2.

The planar electrode 22 has a plate shape, and is basically arranged so as to be horizontal in this embodiment. More specifically, in the example illustrated in FIG. 2(A), the planar electrode 22 is configured so that the electrode surface 22A is horizontal from the center to a predetermined distance (the horizontal range is not limited thereto, but has a circular shape in this embodiment), and the outer peripheral portion of the planar electrode 22 smoothly rises. Although not limited to the following, the planar electrode 22 in this example has a plate shape, and hence the entire planar electrode 22 has a shape that can be regarded as being pot-shaped. Such planar electrode 22 is used under a state in which the center of the electrode surface 22A is arranged to be positioned directly below the needle-shaped electrode 21.

In the example illustrated in FIG. 2(B), the planar electrode 22 is shaped so that the electrode surface 22A follows part of the outer surface of an imaginary sphere. Although not limited to the following, the planar electrode 22 in this example also has a plate shape, and is shaped so as to be smoothly curved along the outer surface of the above-mentioned imaginary sphere. The planar electrode 22 is also used so that the center of the electrode surface 22A is positioned directly below the needle-shaped electrode 21. However, it is preferred that the planar electrode 22 be used so that a lower end of the first cathode 21A of the needle-shaped electrode 21 is positioned at the center of the imaginary sphere having the electrode surface 22A placed on the outer surface thereof. As a result, the distance from the distal end of the first cathode 21A to the electrode surface 22A is equal at any portions of the electrode surface 22A, and hence it can be expected to generate the corona discharge uniformly between the entire surface of the electrode surface 22 and the first cathode 21A.

Although not limited to the following, in this embodiment, a planar electrode as illustrated in FIG. 2(A) is used as the planar electrode 22.

Although not limited to the following, the planar electrode 22 in this embodiment has holes (not shown) through each of which the aqueous solution described later, which is sucked up by a fiber rod described later, is allowed to pass from a lower side to an upper side of the planar electrode 22. There is no theoretical problem as long as at least one hole is present, but a plurality of or a large number of holes may be formed. In this embodiment, the planar electrode 22 is formed of a mesh material in which wires made of a metal having conductivity are woven vertically and horizontally. Thus, a large number of holes are formed in the planar electrode 22.

The planar electrode 22 is supported from below by an electrode support member 24 provided in the container 10.

The shape of the electrode support member 24 is a body of revolution with the axis of the container 10 as an axis thereof. Although not limited to the following, the electrode support member 24 is formed integrally with the container 10 through use of the same material as that of the container 10. The electrode support member 24 is a dish-shaped member extending from an inner circumferential surface of the container 10 in direction to an axis of the container 10. A surface on an upper side of the electrode support member 24 is a concave surface that is curved so as to follow a surface on a lower side of the planar electrode 22 formed in a pot shape. When the planar electrode 22 is fitted into an inner side of the electrode support member 24, the planar electrode 22 is supported by the electrode support member 24 from below under a stable state. As long as the planar electrode 22 can be supported, the configuration of the electrode support member 24 is not required to be the configuration as described above.

A hole 24A is formed in the vicinity of the center of the electrode support member 24. Although not limited to the following, the hole 24A has a circular shape centered on the center of the electrode support member 24 in plan view. The hole 24A is formed in order to bring the aqueous solution, which is sucked up by the fiber rod described later, into contact with the lower surface of the planar electrode 22 formed of a mesh material.

Although not limited to the following, in this embodiment, the electrode surface 22A of the planar electrode 22 is covered with a water-retaining sheet 25. The water-retaining sheet 25 serves to keep the aqueous solution in a film shape on the electrode surface 22A. The water-retaining sheet 25 is a sheet formed of a material having a water-retaining property. Although not limited to the following, in this embodiment, the water-retaining sheet 25 has a shape so as to follow the entire surface of the electrode surface 22A (see FIG. 2(A) and FIG. 2 (B)). The aqueous solution ideally keeps a state of a film shape over the entire surface of the electrode surface 22A under a state of permeating the water-retaining sheet 25.

Examples of a material having a water-retaining property for forming the water-retaining sheet 25 include a resin having a water-retaining property, paper, and fabric. The fabric may be a woven fabric or a nonwoven fabric. Although not limited to the following, the water-retaining sheet 25 in this embodiment is formed of paper.

There is no particular limitation on the thickness of the water-retaining sheet 25. The thickness of the water-retaining sheet 25 may be set to, for example, from about 0.5 mm to about 3 mm.

The planar electrode 22 may be formed of a material having a water-retaining property. In this case, the planar electrode 22 may be formed into a sheet shape. There is no particular limitation on the thickness of the planar electrode 22 formed into a sheet shape, but the thickness may be set to match, for example, the thickness of the water-retaining sheet 25 described above. In the case in which a water-retaining property is imparted to the planar electrode 22, even when the water-retaining sheet 25 is omitted, the aqueous solution is easily allowed to be present in a film shape on the electrode surface 22A of the planar electrode 22. Although depending on the perspective, it may be conceived that, in this case, the planar electrode 22 also serves as the water-retaining sheet 25. In order to impart a water-retaining property to the planar electrode 22, for example, the planar electrode 22 may be formed of a woven fabric or a nonwoven fabric made of fibers having conductivity (typically carbon fibers). However, when the planar electrode 22 is formed of a nonwoven fabric made of carbon fibers, discharge from the first cathode 21A tends to be generated at distal ends of the carbon fibers that slightly protrude from the electrode surface 22A of the planar electrode 22. Thus, it is preferred that the planar electrode 22 be formed of a woven fabric rather than a nonwoven fabric. An example of a woven fabric made of carbon fibers that may be used as the planar electrode 22 having a water-retaining property is "Carbon Fiber Paper (Gas Diffusion Layer (GDL)) (trademark) " manufactured and sold by Mitsubishi Chemical Corporation. In addition, a water-retaining property may be imparted to the planar electrode 22 also, for example, through use of conductive sponge (described later) formed relatively thinly in a sheet shape. In this case, the aqueous solution may be present in a film shape inside the planar electrode 22 as well as on the electrode surface 22A of the planar electrode 22. However, the fact that the aqueous solution is present in a state of a film shape in a wide range equal to or more than a certain level at least on the electrode surface 22A of the planar electrode 22 remains unchanged.

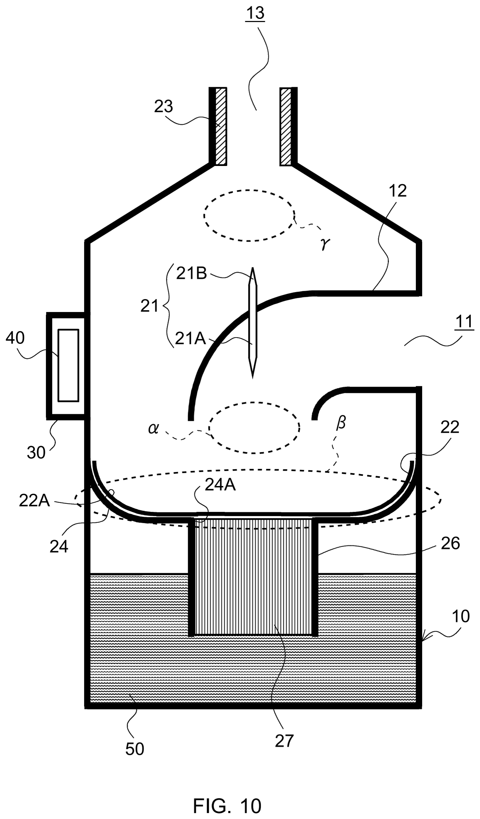

FIG. 10 is a view corresponding to FIG. 1 of the carbon dioxide reduction device given when a water-retaining property is imparted to the planar electrode 22 while the water-retaining sheet 25 is omitted.

As described above, the hole 24A is formed in the electrode support member 24.

Then, a cylindrical rod support member 26 extends downward from an edge of the hole 24A. An upper end of the rod support member 26 is connected to the edge of the hole 24A without any gaps. In addition, a lower end of the rod support member 26 is submerged in the aqueous solution described, which is stored at the bottom of the container 10 in a predetermined amount. A fiber rod 27 is inserted into the rod support member 26.

The rod support member 26 has a function of supporting the fiber rod 27. As long as the function thereof is maintained, the configuration of the rod support member 26 may be different from that described above. For example, as described later, what is required to be submerged in the aqueous solution is a lower end of the fiber rod 27, and the lower end of the rod support member 26 is not always required to be submerged in the aqueous solution.

The fiber rod 27 is formed into a rod shape by bundling fibers having length directions aligned. The fibers for forming the fiber rod 27 are made of, for example, a resin, preferably a resin having a water-absorbing property. Although not limited to the following, in this embodiment, the fibers for forming the fiber rod 27 have a water-absorbing property. The fibers for forming the fiber rod 27 may also be natural fibers. It is well-known that some natural fibers also have a water-absorbing property. The fiber rod 27 is an example of the water absorbing member in the present application, and a combination of the fiber rod 27 and the rod support member 26 is an example of the supply member in the present application.

The entire fiber rod 27 is formed into a bar shape. Although not limited to the following, in this embodiment, the fiber rod 27 is formed into a cylindrical shape, and the diameter thereof is substantially equal to the inner diameter of the rod support member 26 having a cylindrical shape. The fiber rod 27 is fixed to the rod support member 26 by being inserted into an inner side of the rod support member 26.

The fiber rod 27 is brought into a state in which one end thereof, the lower end in this embodiment, is submerged in the aqueous solution described later. In addition, the fiber rod 27 is brought into a state in which another end thereof, an upper end in this embodiment, is in abutment against the lower surface of the planar electrode 22.

The fiber rod 27 has a function of sucking up the aqueous solution from a portion of the lower end thereof submerged in the aqueous solution, and sucking up the aqueous solution to the planar electrode 22. More precisely, an end face on an upper side of the fiber rod 27 is in abutment against the lower surface of the planar electrode 22. The aqueous solution having reached the lower surface of the planar electrode 22 passes through the large number of holes of the planar electrode 22 formed of a mesh material in this embodiment, to pass through the planar electrode 22 and reach the upper side of the planar electrode 22. When a water-retaining property is imparted to the planar electrode 22, and the water-retaining sheet 25 is omitted, the end face on the upper side of the fiber rod 27 is brought into abutment against the lower surface of the planar electrode 22. With this configuration, the aqueous solution penetrates the planar electrode 22, and thus the aqueous solution can seep out to the electrode surface 22A that is the upper surface of the planar electrode 22. As a result, the aqueous solution is present also inside the planar electrode 22, and there occurs a state in which the aqueous solution is present in a film shape over at least a certain area on the electrode surface 22A of the planar electrode 22.

The fiber rod 27 sucks up the aqueous solution stored at the bottom of the container 10 due to the capillary action through the gaps between the fibers. When the fibers for forming the fiber rod 27 have a water-absorbing property, the aqueous solution stored at the bottom of the container 10 is sucked up toward the electrode surface 22A by the absorption of the aqueous solution by the fibers as well as the capillary action. The fiber rod 27 is an example of the water absorbing member in the present application, and more specifically, an example of the water absorbing member that spontaneously sucks up the aqueous solution even without the supply of energy from the outside.

A product that can be used as the fiber rod 27 is available from, for example, Asahi Fiber Industry Co., Ltd. which manufactures the product on a made-to-order basis under the product name "Fiber Rod". In addition, the fiber rod 27 may also be replaced with general sponge made of a natural material or a resin.

The tubular electrode 23 is positioned close to the exhaust port 13 with respect to the needle-shaped electrode 21. The tubular electrode 23 is positioned on an upper side of the needle-shaped electrode 21. Although not limited to the following, in this embodiment, the tubular electrode 23 is fitted into an inner side of the exhaust port 13. The tubular electrode 23 has a tubular shape or a ring shape, and the diameter of an outer surface thereof is equal to the diameter of an inner surface of the exhaust port 13. As a result, the tubular electrode 23 is mounted on the inner side of the exhaust port 13 under a state in which the outer surface of the tubular electrode 23 is in contact with the inner surface of the exhaust port 13 without any gaps. The center of the tubular electrode 23 having a circular shape in plan view is placed on the axis of the container 10. Thus, the center of the tubular electrode 23 is positioned directly above the needle-shaped electrode 21.

A control unit 30 is provided at an appropriate position on the container 10, in this embodiment, on a side surface on the left side in FIG. 1.

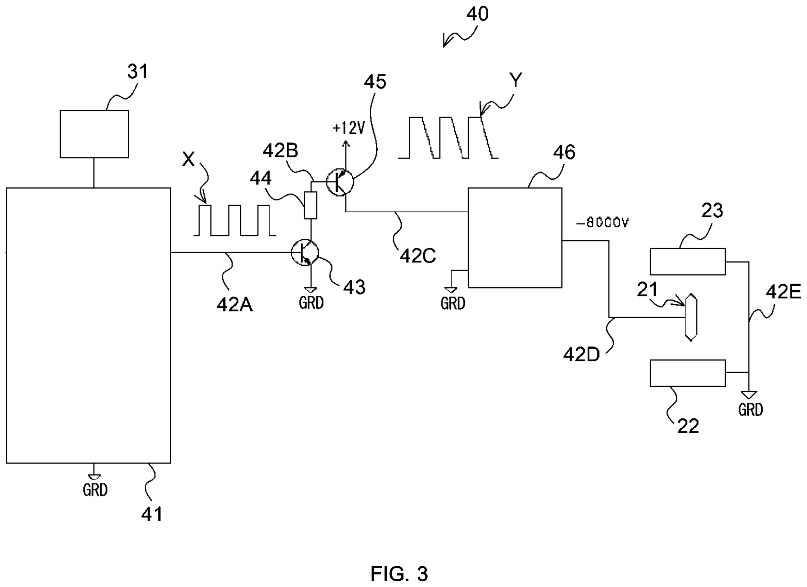

An operation switch 31 (not illustrated in FIG. 1, but illustrated in FIG. 3) is provided on an outer side of the control unit 30. The operation switch 31 is used for a user to turn ON/OFF the operation of the carbon dioxide reduction device as described later. As the operation switch 31, any publicly-known or well-known appropriate device, such as a physical switch that is switched ON/OFF by movement or a touch panel that is switched ON/OFF by touch, may be adopted.

The inside of the control unit 30 is hollow, and a pulse power supply device 40 that is a power supply device is arranged inside the control unit 30. The pulse power supply device 40 is a power supply device that applies a pulse voltage, which is a pulsed high voltage, as described later between the needle-shaped electrode 21 and each of the planar electrode 22 and the tubular electrode 23, more specifically, between the first cathode 21A and the planar electrode 22 and between the second cathode 21B and the tubular electrode 23. In this embodiment, the voltage applied between the two sets of cathodes and anodes is set to a pulse voltage, but the configuration is not always limited thereto. When the voltage is not a pulse voltage, the pulse power supply device 40 may be simply a power supply device that generates a constant voltage.

Although not limited to the following, in this embodiment, the pulse power supply device 40 is designed to apply a pulsed high voltage of from 4,000 V to 11,000 V at a frequency of from 30 Hz to 500 Hz as a pulse voltage between the first cathode 21A and the planar electrode 22. A similar pulse voltage is also applied between the second cathode 21B and the tubular electrode 23. Through use of a power supply device that is modified so as to apply a pulse voltage, such pulse voltage can be generated.

In order to enable such voltage to be applied, the pulse power supply device 40 is connected by conductive wires to required electrodes among the needle-shaped electrode 21, the planar electrode 22, and the tubular electrode 23.

A circuit diagram of the pulse power supply device 40 is illustrated in FIG. 3. In FIG. 3, the portion excluding the operation switch 31, the needle-shaped electrode 21, the planar electrode 22, and the tubular electrode 23 corresponds to the pulse power supply device 40.

The pulse power supply device 40 in this embodiment includes a high-voltage power supply device as described later. The portion of the pulse power supply device 40 preceding the high-voltage power supply device serves as a portion for determining the shape of a pulse wave, which may be referred to as "pulse waveform determination device".

The pulse power supply device 40 includes a computer 41 as illustrated in FIG. 3. The computer 41 is a device that performs information processing, and the information processing which the computer 41 performs may be freely changed by the software to be installed therein. The computer 41 may be, when feasible, a computer device, such as a personal computer, a single-board computer, such as a Raspberry Pi manufactured and sold by the Raspberry Pi Foundation in the UK, or an integrated circuit (IC). In this embodiment, the computer 41 is designed to output a reference rectangular wave that is a rectangular wave with a certain frequency and a certain duty ratio in any case. The computer 41 is also connected to the operation switch 31 so as to receive an input from the operation switch 31. When the computer 41 receives an input from the operation switch 31, for example, an input for starting the operation of the carbon dioxide reduction device (ON input), the computer 41 generates and outputs a reference rectangular wave in response to the input, and also turns on the power supply of the high-voltage power supply device described later. When the computer 41 receives an input from the operation switch 31, for example, an input for terminating the operation of the carbon dioxide reduction device (OFF input), the computer 41 stops generating a reference rectangular wave in response to the input and also turns off the power supply of the high-voltage power supply device described later.

It is a matter of course that the computer 41 capable of performing the information processing as described above is publicly-known or well-known irrespective of whether the computer 41 is a computer device, a single-board computer, or an IC, and hence further description thereof is omitted.

The reference rectangular wave is input to a base of an NPN transistor 43 through a first connection line 42A from the computer 41. An emitter of the NPN transistor 43 is grounded (GRD). A collector of the NPN transistor 43 is connected to a base of a PNP transistor 45 through a second connection line 42B having a resistor 44 provided in a path thereof.

An emitter of the PNP transistor 45 is connected to a power supply of 12V. A collector of the PNP transistor 45 is connected to a high-voltage power supply device 46 through a third connection line 42C.

The high-voltage power supply device 46 is a publicly-known or well-known device that outputs a pulsed high voltage corresponding to a pulse waveform described later, which is input through the third connection line 42C. The high-voltage power supply device 46 is grounded (GRD), and is designed to generate a high voltage with the potential of GRD being a reference of 0V. Although not limited to the following, in this embodiment, the voltage which the high-voltage power supply device 46 can generate is set to from -4,000 V to -12,000 V. Although not limited to the following, in this embodiment, the voltage is - 8,000 V.

The high-voltage power supply device 46 is connected to the needle-shaped electrode 21 through a fourth connection line 42D. The pulsed high voltage generated by the high-voltage power supply device 46 is transmitted to the needle-shaped electrode 21 through the fourth connection line 42D.

Meanwhile, the planar electrode 22 and the tubular electrode 23, which have already been described, are provided below and above the needle-shaped electrode 21, respectively. Both the planar electrode 22 and the tubular electrode 23 are grounded (GRD). Although not limited to the following, in this embodiment, the planar electrode 22 and the tubular electrode 23 are connected to each other through a fifth connection line 42E, and are grounded through the fifth connection line 42E.

Needless to say, the first connection line 42A to the fifth connection line 42E are all conductive wires having conductivity.

A method of using the carbon dioxide reduction device described above and the operation thereof are described.

When a user uses the carbon dioxide reduction device, the carbon dioxide reduction device is arranged, for example, at an appropriate position in a room. The "room" in which the carbon dioxide reduction device is arranged typically refers to an indoor space in real estate or the interior of an automobile. The carbon dioxide reduction device can be reduced in size and weight to such a degree as to be portable.

Around the time when the carbon dioxide reduction device is arranged at an appropriate position in the room, the user stores the aqueous solution 50 at the bottom of the container 10 (FIG. 1). Although not limited to the following, in this embodiment, a certain range of the container 10 below the planar electrode 22 is set to the aqueous solution tank as defined in the present application in which the aqueous solution 50 is allowed to be stored.

The aqueous solution 50 contains sodium ions Na⁺. The aqueous solution 50 may be set to, for example, a sodium hypochlorite (NaClO₂) aqueous solution or a sodium chloride (NaCl) aqueous solution. Although not limited to the following, in this embodiment, a sodium chloride aqueous solution is used. The aqueous solution 50 may be injected into the bottom of the container 10, for example, from the exhaust port 13 with a hose. When the water-retaining sheet 25, the planar electrode 22, the fiber rod 27, and the like obstruct this operation, for example, those elements may be designed to be removable from the electrode support member 24 and the rod support member 26 so that the aqueous solution 50 can be injected into the bottom of the container 10 after removing those elements. Such appropriate modification may, of course, be freely made. Alternatively, an injection port capable of being freely opened and closed for injecting the aqueous solution 50 into the container 10 may be formed in a side surface in the vicinity of the bottom of the container 10, and the aqueous solution 50 may be injected into the inside of the container 10 from the injection port. The aqueous solution 50 stored at the bottom of the container 10 is maintained so that the liquid surface thereof is not brought into contact with the planar electrode 22.

When the aqueous solution 50 is stored at the bottom of the container 10, the lower end of the fiber rod 27 is brought into a state of being submerged in the aqueous solution 50. Due to the capillary action, or in addition, the water-absorbing property of the fibers for forming the fiber rod 27, the fiber rod 27 sucks up the aqueous solution 50. When the aqueous solution 50 moves upward through the fiber rod 27 to reach an upper end of the fiber rod 27, the aqueous solution 50 reaches the upper side of the planar electrode 22 through the large number of holes of the planar electrode 22 formed of a mesh material. The water-retaining sheet 25 having a water-retaining property is present on the planar electrode 22. The aqueous solution 50 is sucked by the water-retaining sheet 25 and, although it may take some time, eventually penetrates the entire water-retaining sheet 25.

As a result, the aqueous solution 50 having a spread corresponding to the thickness of the water-retaining sheet 25 and the size of the water-retaining sheet 25 is present in a film shape on the electrode surface 22A that is the upper surface of the planar electrode 22.

The supply of the aqueous solution 50 to the water-retaining sheet 25 described above is continuously performed as long as the aqueous solution 50 at the bottom of the container 10 does not run out.

When the carbon dioxide reduction device is arranged at an appropriate position in the room, and the aqueous solution 50 has penetrated the entire water-retaining sheet 25, the user operates the operation switch 31 to input an ON input that serves as an input for starting the operation of the carbon dioxide reduction device. The ON input is input to the computer 41.

The computer 41 having received the ON input outputs a reference rectangular wave that is a rectangular wave having a certain frequency and a certain duty ratio. The frequency and the duty ratio of the rectangular wave output by the computer 41 may always be the same or may be designed to be varied depending on, for example, the input from the operation switch 31, but in this embodiment, the frequency and the duty ratio are set to be always the same. The frequency and the duty ratio of the rectangular wave are uniquely determined by, for example, data that specifies the frequency and the duty ratio recorded on a memory included in the computer 41, respectively.

When the computer 41 having received the ON input also turns on the power supply of the high-voltage power supply device 46. As a result, the high-voltage power supply device 46 is brought into a state of being able to generate a pulse voltage that is a pulsed high voltage, when the pulse waveform described later is input.

The computer 41 generates a reference rectangular wave that is a rectangular wave. The reference rectangular wave is conceptually denoted by reference symbol X in FIG. 3.

The reference rectangular wave is designed to be input to the base of the NPN transistor 43 through the first connection line 42A from the computer 41. Although not limited to the following, the voltage of the reference rectangular wave (potential difference between a portion in the ON state and a portion in the OFF state) is set to 5 V. A reference waveform, which has the same frequency and duty ratio as those of the reference rectangular wave generated by the computer 41, but which has a voltage amplified to 12 V, is output from the collector of the NPN transistor 43. The amplified reference waveform is output from the collector of the NPN transistor 43 to the second connection line 42B, and is input to the base of the PNP transistor 45 through the resistor 42.

A reference waveform, which has the same frequency and duty ratio as those of the reference rectangular wave generated by the computer 41, but which has a current amplified, is output from the collector of the PNP transistor 45. This reference waveform is hereinafter referred to as "pulse waveform". The pulse waveform is conceptually denoted by reference symbol Y in FIG. 3. The pulse waveform Y is identical to the reference waveform generated by the computer 41 as described above in terms of frequency and duty ratio, but the pulse waveform Y is no longer a rectangular wave. In the pulse waveform Y, a rising edge (rising edge in a waveform plotted with time on a horizontal axis and a potential difference on a vertical axis) at a portion at which the OFF state is switched to the ON state is nearly vertical, and a substantially constant potential is kept under the ON state. However, the potential does not immediately drop even when the ON state is switched to the OFF state, and the potential is decreased in a substantially linear manner.

The waveform of the pulse waveform is different from the reference rectangular waveform generated by the computer 41 because the NPN transistor 43 and the PNP transistor 45 between the computer 41 and the high-voltage power supply device 46 each function like a capacitor.

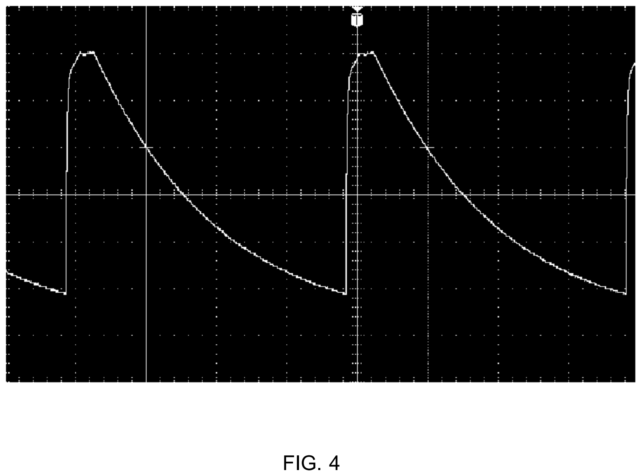

An example of the pulse waveform Y is shown in FIG. 4. The pulse waveform Y shown in FIG. 4 has a frequency of 50 Hz and a duty ratio of 10%. The duty ratio is set to be relatively small at about 10% for the following reason.

It is a portion of rising of the pulse voltage that is effective for inducing the specific reaction. In contrast, it is conceived that a portion after rising of the pulse voltage contributes little to the induction of the specific reaction. Thus, a portion in which the potential of the pulse voltage is decreased most is required to be set to a sufficiently low potential, by minimizing the duty ratio and lengthening a period of time during which the potential of the pulse waveform Y is decreased. In other words, when the period of time during which the potential of the pulse waveform Y is decreased cannot be sufficiently lengthened, the next rising of the pulse voltage starts from a relatively high voltage, with the result that there is a risk in that the potential difference of the pulse voltage may not be sufficiently ensured.

However, such modification is made for the following. That is, the pulse power supply device 40 in this embodiment is designed to enable the high-voltage power supply device 46 that is not particularly high in performance to generate a pulse voltage being a high voltage and having a relatively high frequency. Thus, when the high-voltage power supply device 46 alone can generate a pulse voltage being a high voltage and having a relatively high frequency, such modification is not always required.

A pulse waveform is input to the high-voltage power supply device 46 from the collector of the PNP transistor 45 through the third connection line 42C.

The high-voltage power supply device 46 generates a pulsed high voltage corresponding to the received pulse waveform.

The pulse voltage that is a pulsed high voltage is applied to the needle-shaped electrode 21 from the high-voltage power supply device 46 through the fourth connection line 42D. The high-voltage power supply device 46 is grounded, and the planar electrode 22 and the tubular electrode 23 are also grounded. Thus, each of the potential differences between the needle-shaped electrode 21 and the planar electrode 22 and between the needle-shaped electrode 21 and the tubular electrode 23 becomes a potential difference corresponding to the pulse voltage generated by the high-voltage power supply device 46. In other words, a high voltage corresponding to the pulse voltage is applied between the needle-shaped electrode 21 and the planar electrode 22 and between the needle-shaped electrode 21 and the tubular electrode 23. Each of the potential differences between the needle-shaped electrode 21 and the planar electrode 22 and between the needle-shaped electrode 21 and the tubular electrode 23 is set to from 4,000 V to 11,000 V. Although not limited to the following, in this embodiment, the potential difference is set to 8,000 V.

As a result, the corona discharge in which electrons fly in the air is generated between the needle-shaped electrode 21 (more precisely, the first cathode 21A) and the planar electrode 22 and between the needle-shaped electrode 21 (more precisely, the second cathode 21B) and the tubular electrode 23 from the former to the latter, respectively.

The electrode surface 22A of the planar electrode 22 is a concave surface as described above. Thus, the discharge from the first cathode 21A of the needle-shaped electrode 21 is relatively uniformly performed over the entire electrode surface 22A. When the distance from the lower end of the first cathode 21A to the electrode surface 22A that is a concave surface is always equal regardless of the position on the electrode surface 22A, the discharge from the first cathode 21A to the electrode surface 22A of the planar electrode 22 is ideally generated with equal probability at all points on the electrode surface 22A.

Under this state, air enters the container 10 from the intake port 11. As is well known, the air contains water vapor (that is, water H₂O) in addition to nitrogen, oxygen, and carbon dioxide.

The air flows through the duct 12 to reach a region between the first cathode 21A of the needle-shaped electrode 21 and the planar electrode 22. In this region (portion roughly enclosed by the dashed line α in FIG. 1, hereinafter referred to as "α-range"), the corona discharge (which may also be dark discharge) is generated as described above.

In the α-range, electrons e⁻ are released from the first cathode 21A of the needle-shaped electrode 21 toward the planar electrode 22.

The released electrons e⁻ collide with oxygen O₂ in the air, and generate ozone O₃ through the chemical reaction represented by the following chemical formula (1).

3O₂+6ₑ₋-2O₃ (1)

In addition, in the α-range, the electrons e⁻ collide with ozone O₃ and water vapor H₂O, and through the chemical reaction represented by the following chemical formula (2), oxygen O₂ and hydroxide ions OH⁻ are generated.

O₃+H₂O+2ₑ₋→O₂+2OH⁻ (2)

The hydroxide ions OH⁻ having a negative charge are accelerated by being pulled by the planar electrode 22 (voltage: 0 V) having a relatively positive potential with respect to the first cathode 21A. This is an ion wind. The ion wind and the air move downward to collide with the water-retaining sheet 25 arranged above the planar electrode 22, and microscopically collide with the aqueous solution 50 having penetrated the water-retaining sheet 25.

It is only required that the first cathode 21A generate corona discharge with respect to the planar electrode 22, thereby being capable of generating an ion wind in a downward direction, in this embodiment, consequently in a direction directed to the planar electrode 22. Thus, the first cathode 21A is not required to be set to part of the needle-shaped electrode 21.

Next, the following phenomenon occurs inside the water-retaining sheet 25 (although not precise, the portion roughly enclosed by the dashed line β in FIG. 1, hereinafter referred to as "β-range").

The water-retaining sheet 25 is positioned between the first cathode 21A and the planar electrode 22. Thus, the aqueous solution 50, which is present in a film shape inside the water-retaining sheet 25, and which has a certain spread, is exposed to corona discharge.

As a result, it is conceived that the following reaction in which the water in the aqueous solution 50 is ionized occurs.

That is, the water (H₂O) in the aqueous solution 50 is ionized into hydrogen ions (H⁺) and hydroxide ions (OH⁻) by the corona discharge.

H₂O→H⁺+OH⁻ (3)

In addition, it is conceived that, when the hydroxide ions (OH⁻) contained in the ion wind collide with the aqueous solution 50, transpiration of the aqueous solution 50 occurs. More specifically, it is conceived that the components (chloride ions Cl⁻ and water H₂O) of the aqueous solution 50 are transpired.

In addition, the following chemical reaction also occurs in the β-range.

Water H₂O and sodium chloride NaCl are present in the aqueous solution 50. Sodium chloride is ionized in the aqueous solution 50 into sodium ions Na⁺ and chloride ions Cl⁻. In addition, part of the hydroxide ions OH⁻ having collided with the aqueous solution 50 still remains in the aqueous solution 50. In addition, part of the water H₂O in the aqueous solution 50 is ionized into hydrogen ions H⁺ and hydroxide ions OH⁻. Then, the amount of the hydroxide ions OH⁻ is increased in any portions of the water-retaining sheet 25 as compared to the normal state, by the reaction represented by the above-mentioned chemical formula (3).

That is, sodium ions Na⁺ and hydroxide ions OH⁻ are present in the aqueous solution 50. The same also holds true for a case in which the aqueous solution 50 is an aqueous solution of sodium hypochlorite (NaClO₂).

In the aqueous solution 50, sodium ions Na⁺ and hydroxide ions OH⁻ cause the reaction represented by the following chemical formula (4) or (5) (those reactions are specific reactions) with carbon dioxide CO₂ to produce sodium carbonate Na₂CO₃ or sodium bicarbonate NaHCO₃. Carbon dioxide is decomposed in a process of both the reactions, and hence carbon dioxide is reduced.

2Na⁺+2OH⁻+CO₂→Na₂CO₃+H₂O (4)

Na⁺+OH⁻+CO₂→NaHCO₃ (5)

Regardless of which reaction represented by the chemical formula (4) or (5) is caused, hydroxide ions OH⁻ are required. When sodium ions Na⁺ are sufficiently present, the reactions represented by the chemical formulae (4) and (5) are accelerated in proportion to an increase in amount of hydroxide ions OH⁻. Setting the amount of sodium ions Na⁺ to a sufficient amount can be easily achieved by, for example, increasing the concentration of sodium chloride NaCl in the aqueous solution 50. Meanwhile, in this embodiment, with the aqueous solution 50 being exposed to corona discharge to cause the reaction of the chemical formula (3) in which the water in the aqueous solution 50 is ionized, the amount of hydroxide ions OH⁻ is set to be sufficient or set to be at least larger than that in the case in which the aqueous solution 50 is not exposed to corona discharge. As a result, according to the carbon dioxide reduction device according to this embodiment, the reactions of the chemical formulae (4) and (5), which are direct reactions for reducing carbon dioxide, can be accelerated, and hence the carbon dioxide reduction performance is increased.

Sodium carbonate Na₂CO₃ and sodium bicarbonate NaHCO₃ may be continuously dissolved in the aqueous solution 50 or may be mixed with air. With fixing of carbon C in carbon dioxide CO₂ to sodium carbonate Na₂CO₃ and sodium bicarbonate NaHCO₃, carbon dioxide is reduced.

The specific reaction occurs each time the pulse power supply device 40 applies a high voltage between the first cathode 21A and the planar electrode 22. The frequency of the pulsed high voltage is set to from 30 Hz to 500 Hz, and hence the specific reaction occurs at a timing of from 30 times to 500 times per second. Thus, this carbon dioxide reduction device reduces even more carbon dioxide.

The air containing ozone O₃, sodium carbonate Na₂CO₃, and sodium bicarbonate NaHCO₃ in addition to transpired chloride ions Cl⁻ and water H₂O moves upward to reach a region between the second cathode 21B of the needle-shaped electrode 21 and the tubular electrode 23. In this region (portion roughly enclosed by the dashed line γ in FIG. 1, hereinafter referred to as "γ-range"), corona discharge is generated as described above.

In the γ-range, the electrons e⁻ are released from the second cathode 21B to the tubular electrode 23.

The released electrons e⁻ collide with oxygen O₂ in the air, and generate ozone O₃ through the chemical reaction represented by the above-mentioned chemical formula (1).

In addition, in the γ-range, the electrons e⁻ collide with ozone O₃ and water vapor H₂O, and through the chemical reaction represented by the above-mentioned chemical formula (2), oxygen O₂ and hydroxide ions OH⁻ are generated.

The chloride ions Cl⁻ and hydroxide ions OH⁻ having a negative charge are accelerated by being pulled by the tubular electrode 23 (voltage: 0 V) having a relatively positive potential with respect to the second cathode 21B, and passes through the tubular electrode 23 to be released from the exhaust port 13 in an upper portion of the container 10 to the outside of the container 10. This flow is an ion wind.

Along with the exhaust of the ion wind to the outside of the container 10, the air containing hydroxide ions OH⁻, chloride ions Cl⁻, water H₂O, ozone O₃, sodium carbonate Na₂CO₃, and sodium bicarbonate NaHCO₃ is discharged to the outside of the container 10. As a result, a negative pressure is created in the container 10, and hence the inflow of the air from the intake port 11 to the container 10 is accelerated.

The second cathode 21B and the tubular electrode 23 are intended to generate corona discharge therebetween and to generate an ion wind toward the exhaust port 13 as described above. Thus, the second cathode 21B is not required to be set to part of the needle-shaped electrode 21, and the tubular electrode 23 is not required to be formed into a tubular shape. In addition, the second cathode 21B and the first cathode 21A are not required to be integrally formed. Modifications may be made within a range in which the above-mentioned object can be achieved.

Hydroxide ions OH⁻, chloride ions Cl⁻, and ozone O₃ are released into the room, and hence this carbon dioxide reduction device also has the effect of space disinfection.

### <Modification Example 1>

Modification Example 1 is described. In Modification Example 1, the same reference symbols as those used in the above-mentioned embodiment are used for the same elements as those of the above-mentioned embodiment, and overlapping description is omitted in some cases.

A carbon dioxide reduction device according to Modification Example 1 is substantially the same as the carbon dioxide reduction device described in the above-mentioned embodiment.

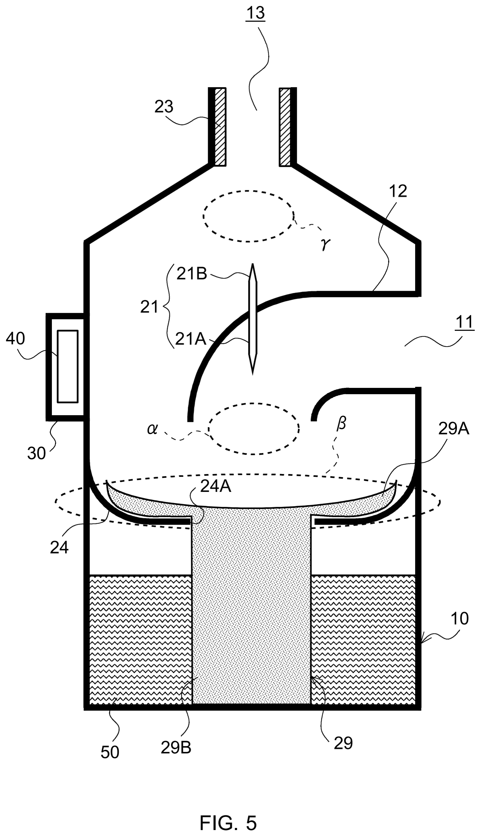

FIG. 5 is a sectional view for schematically illustrating the structure of the carbon dioxide reduction device according to Modification Example 1.

Only the difference in the carbon dioxide reduction device between the above-mentioned embodiment and Modification Example 1 is described. The carbon dioxide reduction device of Modification Example 1 does not include the planar electrode 22, the water-retaining sheet 25, the rod support member 26, and the fiber rod 27, which are included in the carbon dioxide reduction device according to the above-mentioned embodiment. In addition, the carbon dioxide reduction device of Modification Example 1 includes a sponge body 29 that is not included in the carbon dioxide reduction device according to the above-mentioned embodiment instead of including the above-mentioned elements. The foregoing is the only difference between the carbon dioxide reduction devices.

The sponge body 29 is formed of conductive sponge made of a material having conductivity. Examples of the conductive sponge that may be utilized include graphene mesosponge (Graphene Mesosponge) developed by Associate Professor Hirotomo Nishihara, Professor Takashi Kyotani, and others of Institute of Multidisciplinary Research for Advanced Materials, Tohoku University.

Graphene Mesosponge includes a large number of pore walls that are small hollow spheres made of carbon atoms. The pore walls are formed of single-layer graphene. The pore walls have a configuration in which the pore walls are three-dimensionally arranged so that the internal spaces between the pore walls adjacent in longitudinal, lateral, and height directions are in communication with each other, and the adjacent pore walls are connected to each other. Graphene Mesosponge is not only compressible and restorable in the same manner as in general sponge but also is capable of sucking up water due to the capillary action through the large number of pore walls. Further, Graphene Mesosponge is made of carbon atoms, and hence has conductivity comparable to that of carbon black to such a degree as to be utilized as an electrode.

In Modification Example 1, the sponge body 29 made of Graphene Mesosponge, which is an example of conductive sponge, is used for performing the functions of the planar electrode 22, the water-retaining sheet 25, and the fiber rod 27 omitted from the carbon dioxide reduction device according to the above-mentioned embodiment.

The sponge body 29 includes a dish portion 29A and a column portion 29B. Although not limited to the following, the dish portion 29A and the column portion 29B are integrally formed. Although not limited to the following, the dish portion 29A and the column portion 29B are both set to symmetrical bodies of revolution centered on the axis of the container 10.

The dish portion 29A functions as the planar electrode 22 and the water-retaining sheet 25 included in the carbon dioxide reduction device according to the above-mentioned embodiment. The column portion 29B functions as the fiber rod 27 included in the carbon dioxide reduction device according to the above-mentioned embodiment. The dish portion 29A and the column portion 29B may be integrally formed, or the dish portion 29A and the column portion 29B may be separate bodies under the condition that an upper end of the column portion 29B is in close contact with a lower end of the dish portion 29A.

The dish portion 29A has a lower surface formed into a curved surface so as to substantially follow an upper surface of the electrode support member 24, and an upper surface of the dish portion 29A is processed so as to form a concave surface. The upper surface of the dish portion 29A corresponds to the electrode surface 22A. The concave surface on the upper surface of the dish portion 29A corresponds to the concave surface on the electrode surface 22A of the planar electrode 22 in the above-mentioned embodiment. The concave surface on the upper surface of the dish portion 29A is recessed with respect to the first cathode 21A. In addition, as stated in the above-mentioned description of the embodiment, an outer surface of an imaginary sphere centered on the lower end of the first cathode 21A and the surface of the concave surface are matched with each other.

The column portion 29B has a bar shape. Although not limited to the following, the column portion 29B has a columnar shape in this embodiment. The column portion 29B in this embodiment has an upper end extending to the lower surface of the dish portion 29A. Although not limited to the following, a lower end of the column portion 29B extends to the bottom of the container 10. Thus, a certain range on the lower end side of the column portion 29B is submerged in the aqueous solution 50 when the aqueous solution 50 is stored at the bottom of the container 10.

A method of using the carbon dioxide reduction device of Modification Example 1 and the operation thereof are the same as the above-mentioned method of using the carbon dioxide reduction device according to the embodiment and the operation thereof.

The aqueous solution 50 is injected into the container 10. Then, the lower end side of the column portion 29B of the sponge body 29 is immersed in the aqueous solution 50. Then, due to the capillary action, the column portion 29B of the sponge body 29 sucks up the aqueous solution 50 from the lower end side.

The aqueous solution 50 rises through the column portion 29B to reach the dish portion 29A from the upper end of the column portion 29B. The aqueous solution 50 further seeps out to the upper surface of the dish portion 29A, that is, the electrode surface 22A. As a result, the aqueous solution 50 having a spread corresponding to the size of the dish portion 29A is present in a layered shape on the electrode surface 22A in the dish portion 29A. It would be obvious that the column portion 29B of the sponge body 29 may be replaced with the fiber rod 27 described in the above-mentioned embodiment and even with this configuration, the aqueous solution 50 can be supplied to the dish portion 29A of the sponge body 29. In addition, conversely, it would also be obvious that the fiber rod 27 in the above-mentioned embodiment may be replaced with the column portion 29B of the sponge body 29.

The dish portion 29A is part of the sponge body 29 formed of conductive sponge, and the electrode surface 22A is the upper surface of the dish portion 29A. The conductive sponge itself has a water-retaining property, and hence the aqueous solution 50 having a layered shape is allowed to have a certain spread on the electrode surface 22A without arranging the water-retaining sheet 25 on the dish portion 29A.

The supply of the aqueous solution 50 to the electrode surface 22A included in the dish portion 29A described above is continuously performed as long as the aqueous solution 50 at the bottom of the container 10 does not run out.

When the carbon dioxide reduction device is arranged at an appropriate position in the room, and the aqueous solution 50 spreads in a layered shape on the dish portion 29A of the sponge body 29, the user operates the operation switch 31 to input an ON input, which is an input for starting the operation of the carbon dioxide reduction device.

The subsequent steps are the same as those in the above-mentioned embodiment.

The corona discharge in which electrons fly in the air is generated between the needle-shaped electrode 21 (more precisely, the first cathode 21A) and the dish portion 29A of the sponge body 29 and between the needle-shaped electrode 21 (more precisely, the second cathode 21B) and the tubular electrode 23 from the former to the latter, respectively.

In the α-range, the β-range, and the γ-range, the same phenomena as those described in the above-mentioned embodiment occur, respectively.

As a result, carbon dioxide reduction is achieved, and the effect of space disinfection is obtained by the release of hydroxide ions OH⁻, chloride ions Cl⁻, and ozone O₃ into the room.

### <Modification Example 2>

A carbon dioxide reduction device of Modification Example 2 is described.

The carbon dioxide reduction device of Modification Example 2 is substantially the same as the carbon dioxide reduction device of the first embodiment.

The difference therebetween lies in that as the first cathode 21A, which is part of the needle-shaped electrode 21 and is a single electrode in the first embodiment, a plurality of first cathodes 21A are used in Modification Example 2.

In this embodiment, the first cathode 21A, which is a collection of needle-shaped electrodes, is formed as described below.

The first cathode 21A is formed as part of one needle-shaped electrode 21 that includes the first cathode 21A and the second cathode 21B in the same manner as described in the first embodiment.

In addition, the needle-shaped electrode 21 is electrically conducted to an electrode body including a large number of needle-shaped electrodes as described later.

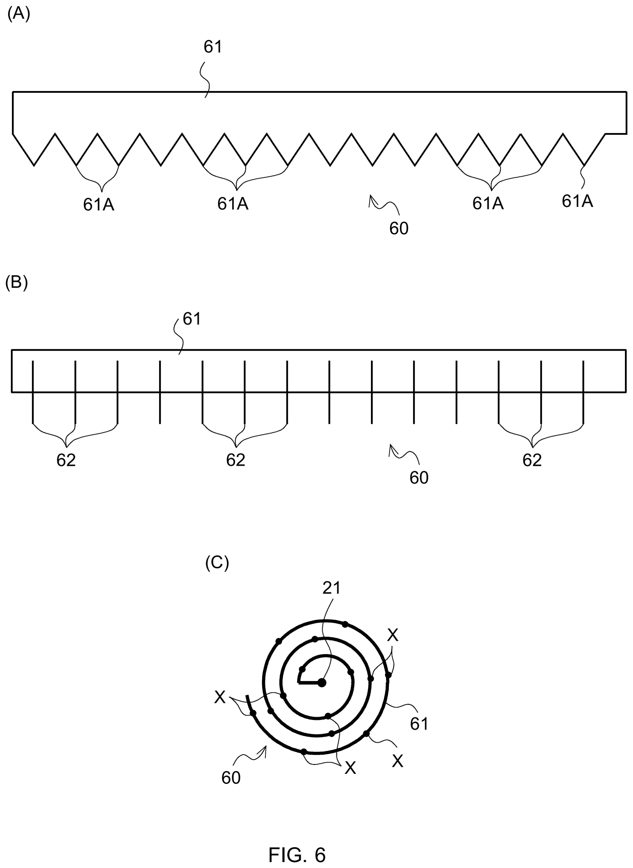

Although not limited to the following, the electrode body 60 in this embodiment includes a metal plate 61, which has an elongated shape with conductivity, and which is not limited to but is formed into a rectangular shape in this embodiment, as illustrated in FIG. 6(A) or FIG. 6(B).

In the example illustrated in FIG. 6(A), an edge on a lower side of the metal plate 61 is formed in a zigzag pattern. Sharply pointed vertices 61A at the edge on the lower side of the metal plate 61 are needle-shaped electrodes. Although not limited to the following, in this embodiment, 14 vertices 61A that function as needle-shaped electrodes are present, but the number of the vertices 61A may be more or less than 14. Although the vertex 61A of the metal plate 61 or a predetermined range including the vertex 61A does not have a so-called "needle shape", when the vertex nonetheless is an electrode at which discharge is generated from an extremely narrow range that can be referred to as "point", the vertex 61A is encompassed in the "needle-shaped electrode" as defined in the present application.

In the example illustrated in FIG. 6(B), needles 62 that are each also formed of, for example, a metal having conductivity are mounted on the metal plate 61. The needles 62 are electrically conducted to the metal plate 61, and are mounted on the metal plate 61 by, for example, welding. Distal ends (distal ends on a lower side in FIG. 6(B)) of the respective needles 62 protrude downward from the metal plate 61 by the same length. The portion of each of the needles 62 that protrudes downward from the metal plate 61 functions as a needle-shaped electrode.

The metal plate 61 in FIG. 6(A) or FIG. 6(B) is formed into a roll shape by being wound up from any one of end portions in a length direction. As a result, the vertices 61A in the example of FIG. 6(A) or the distal ends of the needles 62 in the example of FIG. 6(B) are placed on the same plane. FIG. 6(C) is a bottom view of one example of the electrode body 60 after being formed into a roll shape. Points X in FIG. 6(C) indicate positions at which the vertices 61A in the example of FIG. 6(A) or the distal ends of the needles 62 in the example of FIG. 6(B), which both function as needle-shaped electrodes (or which are needle-shaped electrodes), are positioned.

The electrode body 60 is electrically conducted to the needle-shaped electrode 21. The electrical conduction between the needle-shaped electrode 21 and the electrode body 60 may be performed directly or through another member. Although not limited to the following, in this embodiment, the electrode body 60 is arranged so that the needle-shaped electrode 21 is positioned in a space at the center of the electrode body 60 formed into a roll shape. Then, one end in the length direction of the metal plate 61 forming the electrode body 60 is electrically conducted to some part of the needle-shaped electrode 21. As a result, the potential applied to the electrode body 60 always becomes the same as the potential applied to the needle-shaped electrode 21. Needless to say, the electrode body 60 may be connected to the pulse power supply device 40 without passing through the needle-shaped electrode 21 by omitting the needle-shaped electrode 21 or the first cathode 21A of the needle-shaped electrode 21.

In addition, in this embodiment, one electrode body 60 is arranged in front of the electrode surface 22 under a state in which the distal ends of portions corresponding to the needle-shaped electrodes thereof face the electrode surface 22A of the planar electrode 22. However, a plurality of electrode bodies 60 may also be arranged in front of the electrode surface 22 under a state in which the distal ends of portions corresponding to the needle-shaped electrodes thereof face the electrode surface 22A. In this case, the plurality of electrode bodies 60 are each brought into an electrically conducted state.

In addition, a plurality of or a large number of first cathodes 21A may also be arranged in front of the electrode surface 22 under a state in which the distal ends of the first cathodes 21A face the electrode surface 22A of the planar electrode 22 without using the electrode body 60. For example, as an example of such configuration, a configuration can be given in which the large number of first cathodes 21A positioned at equal distances from the electrode surface 22 are arranged in a grid pattern when viewed from a direction perpendicular to the electrode surface 22. Also in this case, the large number of first cathodes 21A are brought into a state of being electrically conducted to each other.

Although not limited to the following, in this embodiment, the distal ends of the first cathodes 21A included in the needle-shaped electrode 21 and the vertices 61A in the example of FIG. 6(A) included in the electrode body 60 or the distal ends of the needles 62 in the example of FIG. 6(B) are placed on the same plane.

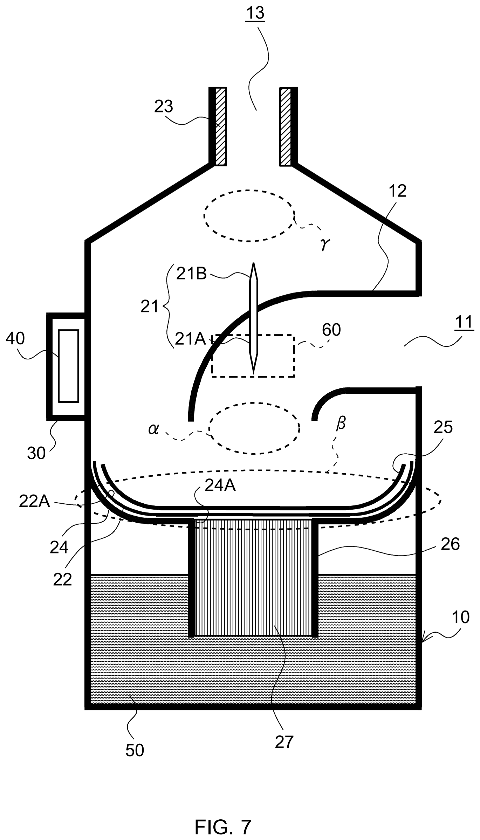

For reference, an overall view of the carbon dioxide reduction device having the electrode body 60 mounted thereon is illustrated in FIG. 7. The positioning in FIG. 7 is the same as that in FIG. 1. In FIG. 7, the electrode body 60 is indicated by two-dot chain lines in a see-through manner. The vertices 61 and the needles 62 are omitted for convenience in the drawing.

An operation of the carbon dioxide reduction device of Modification Example 2 and a method of using the carbon dioxide reduction device of Modification Example 2 are basically the same as the operation of the carbon dioxide reduction device of the first embodiment and the method of using the carbon dioxide reduction device of the first embodiment.

The difference therebetween lies in that the corona discharge that is assumed to be generated between one first cathode 21A and any portion of the electrode surface 22A of the planar electrode 22 in the first embodiment is in actuality generated simultaneously between one first cathode 21A and any portion of the electrode surface 22A and between the vertices 61A in the example of FIG. 6(A) or the distal ends of the needles 62 in the example of FIG. 6(B) which function as the needle-shaped electrodes (or which are the needle-shaped electrodes) in the electrode body 60 and any portion of the electrode surface 22A. With combination with the pulse power supply device 40, the number of corona discharges generated between the needle-shaped electrode 21 and the electrode surface 22A of the planar electrode 22 and between the electrode body 60 and the electrode surface 22A of the planar electrode 22 becomes extremely large.

Due to the corona discharge, in the α-range, the β-range, and the γ-range, the same phenomena as those described in the above-mentioned embodiment occur, respectively. However, in the carbon dioxide reduction device of Modification Example 2, the above-mentioned phenomena that occur in the α-range and the β-range occur in a further accelerated state.

As a result, carbon dioxide reduction is further accelerated, and in addition, the effect of space disinfection obtained by the release of hydroxide ions OH⁻, chloride ions Cl⁻, and ozone O₃ into the room is also further accelerated.

### <Second Embodiment>

A carbon dioxide reduction device according to a second embodiment is described.

The main difference between the carbon dioxide reduction device according to the second embodiment and the carbon dioxide reduction device according to the first embodiment lies in that the planar electrode 22 that is substantially horizontally arranged in the first embodiment is substantially vertically arranged in the second embodiment, or the electrode surface 22A that is substantially horizontally arranged in the first embodiment is substantially vertically arranged in the second embodiment.

Based on this difference, the carbon dioxide reduction devices according to the first embodiment and the second embodiment have various structural differences.

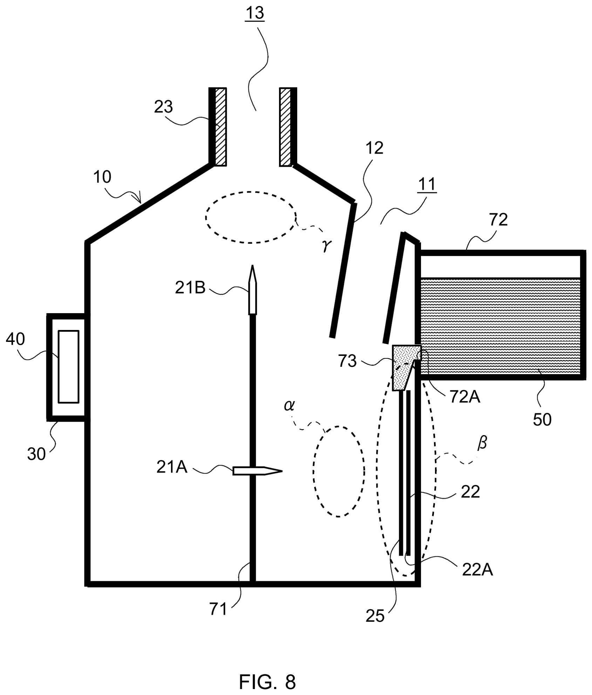

FIG. 8 is a sectional view for schematically illustrating the structure of the carbon dioxide reduction device according to the second embodiment.

The carbon dioxide reduction device according to the second embodiment includes a container 10 in the same manner as in the case of the first embodiment. The container 10 is airtight and watertight. Although not limited to the following, in this embodiment, the container 10 has a vertically elongated square prism shape.

The container 10 includes the intake port 11 and the exhaust port 13 in the same manner as in the case of the first embodiment. However, in the second embodiment, the position of the intake port 11 is different from that in the case of the first embodiment. Although not limited to the following, in the second embodiment, the intake port 11 is formed in an upper portion of the container 10.

Although not limited to the following, the duct 12 is connected to the intake port 11. The duct 12 in the second embodiment may be configured substantially in accordance with the configuration of the duct 12 in the first embodiment. However, in accordance with the fact that the position of the intake port 11 and the position of the α-range between the first cathode 21A and the planar electrode 22 described later are different between the second embodiment and the first embodiment, the shape of the duct 12 is set to be different from that in the first embodiment.

The duct 12 in the second embodiment diagonally extends from the intake port 11 toward the α-range described later. Also in the second embodiment, the duct 12 is not essentially required, and hence the configuration thereof has a certain degree of freedom in the same manner as in the case of the first embodiment.

In the first embodiment, three electrodes are provided in the container 10, but in the second embodiment, four electrodes are provided in the container 10.

In the container 10 of the second embodiment, the first cathode 21A, the second cathode 21B, the planar electrode 22, and the tubular electrode 23 are provided.

The tubular electrode 23 in the second embodiment is the same as that in the first embodiment.

The first cathode 21A and the second cathode 21B in the second embodiment are obtained by dividing one integrated needle-shaped electrode 21 in the first embodiment into two parts.

The first cathode 21A and the second cathode 21B are fixed to the container 10 by some means. Although not limited to the following, in this embodiment, the first cathode 21A and the second cathode 21B are fixed to a thin column 71 extending upward from the bottom of the container 10.

Although not limited to the following, the first cathode 21A is arranged in a horizontal direction, and in this embodiment, the distal end thereof is directed in a direction of the planar electrode 22.

The second cathode 21B is positioned at the same position as that of the second cathode 21B in the first embodiment, and the relative positional relationship with the tubular electrode 23 remains unchanged as compared to the first embodiment. The second cathode 21B is electrically conducted to the first cathode 21A. For example, a conductive wire may be used for the electrical conduction therebetween.

The planar electrode 22 in the second embodiment may have a pot-like shape recessed with respect to the first cathode 21A in the same manner as in the planar electrode 22 in the first embodiment. Although not limited to the following, in this embodiment, the planar electrode 22 in the second embodiment has a flat plate shape. The surface of the planar electrode 22 facing the first cathode 21A is the electrode surface 22A. Although not limited to the following, in this embodiment, the electrode surface 22A is a flat surface and a vertical surface.

Although not limited to the following, the shape of the planar electrode 22 in the second embodiment is rectangular. Then, upper and lower sides of the planar electrode 22 in the second embodiment are horizontal. The first cathode 21A has an axis placed on an axis that perpendicularly penetrates through the center of the planar electrode 22.

An aqueous solution described later is spread in a film shape on a surface of the electrode surface 22A of the planar electrode 22 on the first cathode 21A side in the same manner as in the case of the first embodiment. In order to assist the foregoing, the electrode surface 22A in the second embodiment is covered with the water-retaining sheet 25 in the same manner as in the case of the first embodiment. The material for the water-retaining sheet 25 may be the same as that in the first embodiment. The water-retaining sheet 25 covers, for example, the entire surface of the electrode surface 22A, and the size and shape thereof are the same as those of the electrode surface 22A.

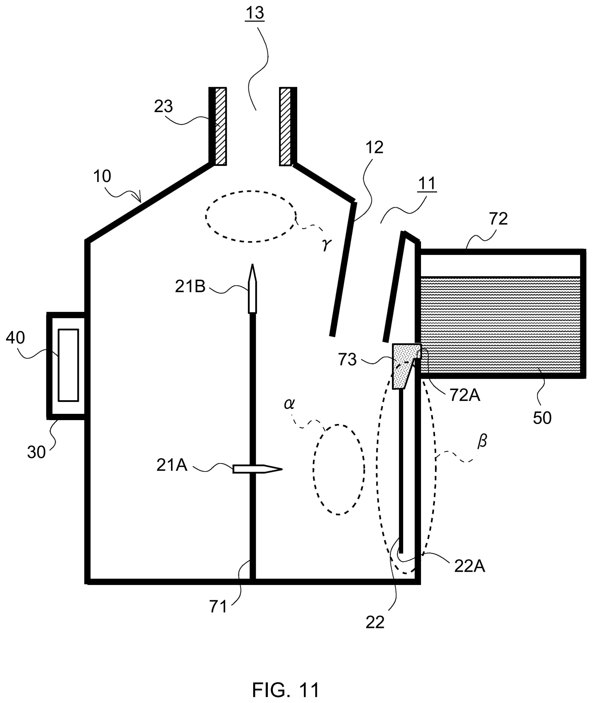

Needless to say, the configuration described in the first embodiment in which a water-retaining property is imparted to the planar electrode 22 and the water-retaining sheet 25 is omitted may also be adopted. FIG. 11 is a view corresponding to FIG. 8 in this case.

An aqueous solution tank 72 that stores the aqueous solution 50 is provided on an outer side of the container 10. The aqueous solution tank 72 is watertight, and is designed to store the aqueous solution 50 therein. Although not limited to the following, in this embodiment, the aqueous solution tank 72 is formed integrally with the container 10. The aqueous solution tank 72 may also be provided inside the container 10, and the configuration and arrangement of the aqueous solution tank 72 may be freely designed as long as the aqueous solution 50 can be stored in the aqueous solution tank 72 and the aqueous solution 50 stored therein can be supplied to the electrode surface 22A of the planar electrode 22.

The aqueous solution tank 72 has an injection port capable of being freely opened and closed (not shown). Through the injection port, the aqueous solution 50 can be replenished into the aqueous solution tank 72.

A hole 72A is formed, for example, in a side surface in the vicinity of the bottom of the container 10. Sponge 73 that introduces, for example, the aqueous solution 50 stored in the aqueous solution tank 72 to the surface of the planar electrode 22, in this embodiment, the water-retaining sheet 25 that covers the planar electrode 22 is arranged in the hole 72A. One end of the sponge 73 is fitted into the hole 72A of the aqueous solution tank 72, and another end thereof is connected to an upper side of the planar electrode 22 having a rectangular shape (more precisely, in this embodiment, an upper side of the water-retaining sheet 25 having a rectangular shape). The aqueous solution 50 absorbed by the sponge 73 through the hole 72A is gradually sent toward the water-retaining sheet 25 covering the planar electrode 22 through the sponge 73. The movement of the aqueous solution 50 is performed due to gravity, and hence the supply of energy from the outside is not required for the movement of the aqueous solution 50. In order to easily achieve the movement of the aqueous solution 50, in this embodiment, the aqueous solution tank 72 is provided at a position higher than the planar electrode 22.

The sponge 73 is connected to the entire length of the upper side of the water-retaining sheet 25 having a rectangular shape, or to a plurality of points of the entire length of the upper side. Although not shown, the sponge 73 has a shape that enables the foregoing. For example, it would be easily understood even by a person not skilled in the art that, when the sponge 73 is shaped so that the width thereof is widened from one end side to another end side, the aqueous solution 50 can be supplied from another end side of the sponge 73 to the entire length of the upper side of the water-retaining sheet 25 having a rectangular shape.

When the aqueous solution 50 is supplied to the entire length of the upper side of the water-retaining sheet 25 having a rectangular shape by the sponge 73, the aqueous solution 50 gradually flows downward in the water-retaining sheet 25 due to gravity. As a result, the aqueous solution 50 is spread ideally over the entire surface of the water-retaining sheet 25. Even when the aqueous solution is supplied to the plurality of points of the upper side of the water-retaining sheet 25, it is preferred that the sponge 73 be designed so that the same occurs.

The sponge 73 may be replaced with another configuration as long as the function of supplying the aqueous solution 50 stored in the aqueous solution tank 72 to the water-retaining sheet 25 or the electrode surface 22A is ensured. The sponge 73 may be replaced with, for example, the fiber rod 27 described in the first embodiment. In addition, although not adopted in the second embodiment, needless to say, the configuration similar to that of the rod support member 26 may be arranged so as to surround the sponge 73.

The supply of the aqueous solution 50 to the water-retaining sheet 25 in this embodiment is as described above, and hence the holes described in the first embodiment are not required to be present in the planar electrode 22. The planar electrode 22 in this embodiment is simply a plate made of a metal.

Also in the second embodiment, the control unit 30 connected to the pulse power supply device 40 is provided at an appropriate position on the container 10 in the same manner as in the first embodiment. The configuration thereof is the same as that in the first embodiment.

The pulse power supply device 40 applies a voltage that generates corona discharge between the first cathode 21A and the planar electrode 22 and between the second cathode 21B and the tubular electrode 23, respectively, between the first cathode 21A and the planar electrode 22 and between the second cathode 21B and the tubular electrode 23.

A method of using the carbon dioxide reduction device according to the second embodiment described above and the operation thereof are described.

When a user uses the carbon dioxide reduction device, the carbon dioxide reduction device is arranged, for example, at an appropriate position in a room.

Around the time when the carbon dioxide reduction device is arranged at an appropriate position in the room, the user stores the aqueous solution 50 in the aqueous solution tank 72 (FIG. 8). In this embodiment, a supply port is opened, and the aqueous solution 50 is replenished into the aqueous solution tank 72. The aqueous solution 50 remains unchanged in the first embodiment and the second embodiment.

The aqueous solution 50 in the aqueous solution tank 72 is conveyed to the entire length of the upper horizontal side of the water-retaining sheet 25 having a rectangular shape through the sponge 73. The aqueous solution 50 flows downward inside the water-retaining sheet 25 from the upper side of the water-retaining sheet 25. As a result, the aqueous solution 50 permeates the entire water-retaining sheet 25.

As a result, the aqueous solution 50 having a spread corresponding to the thickness of the water-retaining sheet 25 and the size of the water-retaining sheet 25 is present in a film shape on the electrode surface 22A that is a surface of the planar electrode 22 facing the first cathode 21A.

The supply of the aqueous solution 50 to the water-retaining sheet 25 described above is continuously performed as long as the aqueous solution 50 in the aqueous solution tank 72 does not run out. When the supply of the aqueous solution 50 to the water-retaining sheet 25 becomes excessive to cause the aqueous solution 50 to drip from the water-retaining sheet 25, for example, the following modification may be made. A lid capable of being freely opened and closed is formed with respect to the hole 72A so that the hole 72A of the aqueous solution tank 72 is opened only during a period of time in which the user inputs an ON input and inputs an OFF input by the switch 31.

When the carbon dioxide reduction device is arranged at an appropriate position in the room and the aqueous solution 50 has penetrated the entire water-retaining sheet 25, the user operates the operation switch 31 to input the ON input that serves as an input for starting the operation of the carbon dioxide reduction device. The ON input is input to the computer 41 of the pulse power supply device 40.

Also in the second embodiment, the pulse power supply device 40 having received the ON input generates a pulse voltage. The pulse voltage is a pulsed high voltage in the same manner as in the case of the first embodiment. The conditions regarding the voltage, frequency, and the like of the pulse voltage remain unchanged in the second embodiment and the first embodiment.

The pulse power supply device 40 applies a voltage that generates corona discharge between the first cathode 21A and the planar electrode 22 and between the second cathode 21B and the tubular electrode 23, respectively.

Under this state, air enters the container 10 from the intake port 11.

The air flows through the duct 12 to reach the α-range between the distal end of the first cathode 21A and the electrode surface 22A of the planar electrode 22.

The phenomenon that occurs in the α-range remains unchanged in the first embodiment and the second embodiment. However, in the second embodiment, the air having flowed downward is changed in direction in which the air flows toward the electrode surface 22A of the planar electrode 22 by the ion wind in the α-range.

In the β-range in the water-retaining sheet 25, the aqueous solution 50 present inside the water-retaining sheet 25 is exposed to corona discharge. As a result, the same phenomenon as that occurs in the β-range in the first embodiment also occurs in the β-range in the second embodiment.

The air containing ozone O₃, sodium carbonate Na₂CO₃ and sodium bicarbonate NaHCO₃ in addition to transpired chloride ions Cl⁻ and water H₂O moves upward to reach the γ-range between the second cathode 21B and the tubular electrode 23. Corona discharge is generated also in the γ-range in the second embodiment, and hence the same phenomenon as that occurs in the γ-range of the first embodiment occurs.

Air containing hydroxide ions OH⁻, chloride ions Cl⁻, water H₂O, ozone O₃, sodium carbonate Na₂CO₃, and sodium bicarbonate NaHCO₃ is discharged from the exhaust port 13 to the outside of the container 10 while being carried by the ion wind generated along with corona discharge. As a result, a negative pressure is created in the container 10, and hence the inflow of the air from the intake port 11 to the container 10 is accelerated.

Also in the second embodiment, the electrode body 60 described in Modification Example 2 may be combined with the first cathode 21A, or the first cathode 21A may be replaced with the electrode body 60.

### <Modification Example 3>

A carbon dioxide reduction device of Modification Example 3 is described.

The carbon dioxide reduction device of Modification Example 3 is configured in the same manner as in the carbon dioxide reduction device according to the second embodiment except as specifically noted.

The difference between the carbon dioxide reduction device of Modification Example 3 and the carbon dioxide reduction device according to the second embodiment lies in that the aqueous solution tank 72 present in the latter is not present in the former. Although not limited to the following, in this embodiment, in the same manner as in the case of the first embodiment, a predetermined range below the lower side of the planar electrode 22 from the bottom of the container 10 in the container 10 functions as the aqueous solution tank as defined in the present application. In Modification Example 3, along with the omission of the aqueous solution tank 72, the sponge 73, which introduces the aqueous solution 50 from the aqueous solution tank 72 to the water-retaining sheet 25, and which is present in the carbon dioxide reduction device according to the second embodiment, is also omitted.

In addition, also in the carbon dioxide reduction device of Modification Example 3, the surface of the planar electrode 22 facing the first cathode 21A is covered with the water-retaining sheet 25. The water-retaining sheet 25 in Modification Example 3 covers the entire surface of the electrode surface 22A of the planar electrode 22, and a lower end of the water-retaining sheet 25 is submerged in the aqueous solution 50. Although not limited to the following, in this embodiment, the planar electrode 22 has a rectangular shape, and upper and lower sides thereof are horizontal. Then, although not limited to the following, the water-retaining sheet 25 is also formed into a rectangular shape. Upper and lower sides of the water-retaining sheet 25 have the same lengths as those of the upper and lower sides of the planar electrode 22, and are horizontal, whereas a side in a lateral direction of the water-retaining sheet 25 is longer than the lengths of the upper and lower sides of the planar electrode 22. When such water-retaining sheet 25 is fixed to the planar electrode 22 so that the upper side thereof is brought into a state corresponding to the upper side of the planar electrode 22, the configuration in which the water-retaining sheet 25 covers the entire surface of the electrode surface 22A of the planar electrode 22 and the lower end of the water-retaining sheet 25 is submerged in the aqueous solution 50 is achieved.

The water-retaining sheet 25 is formed of a material that has a water-retaining property and a water-absorbing property. As a result, the water-retaining sheet 25 absorbs and sucks the aqueous solution upward from the lower end submerged in the aqueous solution 50. Accordingly, the water-retaining sheet 25 is brought into a state in which the aqueous solution 50 permeates the entire water-retaining sheet 25, although a certain amount of time is required. That is, in Modification Example 3, a portion of the water-retaining sheet 25 below the lower side of the planar electrode 22 corresponds to the supply member or the water absorbing member as defined in the present application.

In order to impart a certain degree or more of a water-absorbing property to the water-retaining sheet 25, although not limited to the following, in Modification Example 3, fabric is selected as the material for the water-retaining sheet 25. The fabric for forming the water-retaining sheet 25 may be a woven fabric or a nonwoven fabric. Although not limited to the following, the water-retaining sheet 25 in this embodiment is formed of a nonwoven fabric.

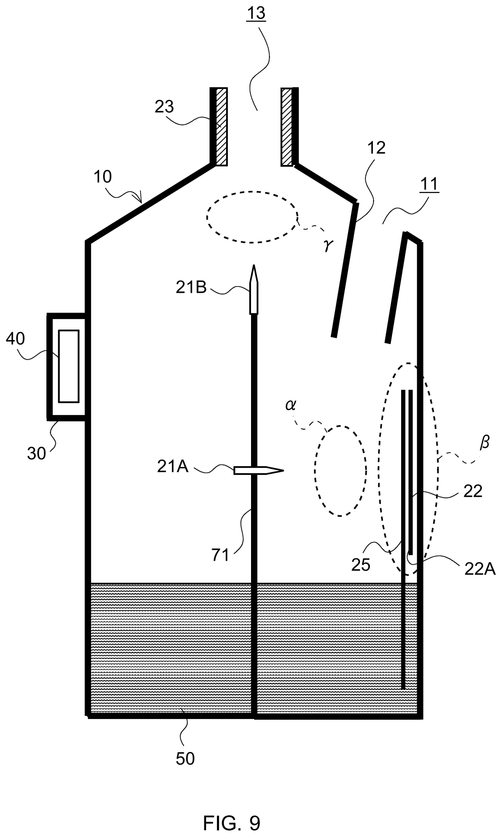

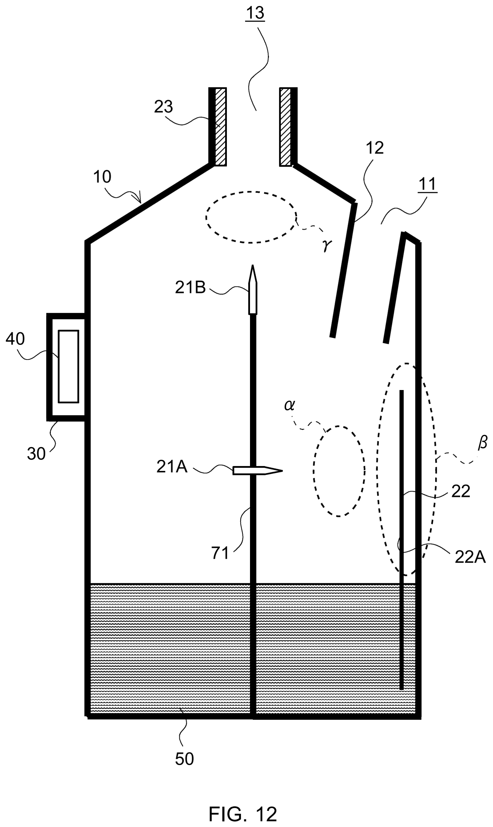

Also in Modification Example 3, the configuration described in the first embodiment in which a water-retaining property is imparted to the planar electrode 22 and the water-retaining sheet 25 is omitted may also be adopted. In this case, a water-absorbing property as well as a water-retaining property may be imparted to the planar electrode 22. The planar electrode 22 having a water-retaining property, which has already been described, also has a water-absorbing property. FIG. 12 is a view corresponding to FIG. 9 in the case in which a water-retaining property is imparted to the planar electrode 22 and the water-retaining sheet 25 is omitted.

A method of using the carbon dioxide reduction device of Modification Example 3 and the operation thereof are the same as the method of using the carbon dioxide reduction device according to the second embodiment and the operation thereof.

The only difference therebetween is the method of supplying the aqueous solution 50 to the water-retaining sheet 25. In the second embodiment, the aqueous solution 50 is supplied from the aqueous solution tank 72 to the water-retaining sheet 25 through the sponge 73, whereas in Modification Example 3, the aqueous solution 50 stored at the bottom of the container 10 is sucked up from the portion of the water-retaining sheet 25 impregnated with the aqueous solution 50, to thereby supply the aqueous solution 50 to the portion of the water-retaining sheet 25 that covers the electrode surface 22A of the planar electrode 22.

As a result, in the α-range, the β-range, and the γ-range in the carbon dioxide reduction device of Modification Example 3, the same phenomena as those that occur in the α-range, the β-range, and the γ-range in the carbon dioxide reduction device according to the second embodiment occur.

### Reference Signs List

- 10: container

- 11: intake port
- 12: duct
- 13: exhaust port
- 21: needle-shaped electrode
- 21A: first cathode
- 21B: second cathode
- 22: planar electrode
- 23: tubular electrode
- 24: electrode support member
- 25: water-retaining sheet
- 26: rod support member
- 27: fiber rod
- 29: sponge body
- 29A: dish portion
- 29B: column portion
- 40: pulse power supply device
- 41: computer
- 46: high-voltage power supply device
- 50: aqueous solution
- 60: electrode body
- 61: metal plate
- 61A: vertex
- 62: needle
- 72: aqueous solution tank
- 73: sponge

## Claims

1. A carbon dioxide reduction device, comprising:
an aqueous solution tank configured to store an aqueous solution containing sodium ions;
a container including:
an intake port that is an opening through which air is allowed to be introduced into an inside of the container; and
an exhaust port that is an opening through which the air is allowed to be discharged from the inside of the container;
a first cathode that is an electrode provided in the container;
a first anode that is an electrode provided in the container, to which a positive voltage relative to the first cathode is to be applied, which is paired with the first cathode, and which has an electrode surface having a planar spread facing the first cathode;
a power supply device configured to apply a voltage having a potential difference that generates corona discharge between the first cathode and the first anode; and
a supply member configured to supply the aqueous solution from the aqueous solution tank to the electrode surface,
wherein the aqueous solution spread in a film shape on the electrode surface is exposed to the corona discharge generated between the first cathode and the first anode through application of the voltage by the power supply device.

2. The carbon dioxide reduction device according to claim 1, wherein the corona discharge is generated in a longitudinal direction by positioning the electrode surface on a lower side of the first cathode.

3. The carbon dioxide reduction device according to claim 1 or 2, wherein a predetermined range of a bottom of the container on a lower side of the first cathode and the first anode is set to the aqueous solution tank.

4. The carbon dioxide reduction device according to claim 1, wherein the corona discharge is generated in a lateral direction by positioning the electrode surface on a lateral side of the first cathode.

5. The carbon dioxide reduction device according to claim 1 or 4, wherein the aqueous solution tank is provided outside the container.

6. The carbon dioxide reduction device according to claim 1,
wherein the supply member includes a water absorbing member formed of a water-absorbing material, one end of which is immersed in the aqueous solution tank, and another end of which is extended to the electrode surface or the vicinity thereof, and
wherein the aqueous solution in the aqueous solution tank absorbed by the water absorbing member is supplied to a surface of the electrode surface.

7. The carbon dioxide reduction device according to claim 6,
wherein the first anode has a plate shape, and the another end of the water absorbing member is extended to a back side of the electrode surface of the first anode, and
wherein the first anode has a hole through which the aqueous solution supplied from the water absorbing member is allowed to pass.

8. The carbon dioxide reduction device according to claim 7, wherein a large number of holes are formed as the hole.

9. The carbon dioxide reduction device according to claim 6, wherein the water absorbing member is formed of yarns bundled together with length directions aligned or sponge.

10. The carbon dioxide reduction device according to claim 9, wherein the yarns are formed of a material having a water-absorbing property.

11. The carbon dioxide reduction device according to claim 1, wherein the first cathode is a needle-shaped electrode protruding toward the electrode surface.

12. The carbon dioxide reduction device according to claim 1, wherein the electrode surface is a concave surface recessed with respect to the first cathode.

13. The carbon dioxide reduction device according to claim 1 or 7, further comprising a water-retaining sheet that is a sheet formed of a material having a water-retaining property, the sheet being configured to cover the electrode surface.

14. The carbon dioxide reduction device according to claim 11, wherein a plurality of needle-shaped electrodes are formed as the needle-shaped electrode.

15. The carbon dioxide reduction device according to claim 1,
wherein the first anode is formed of conductive sponge that is sponge formed of a material having conductivity, and
wherein the electrode surface is a surface of the conductive sponge.

16. The carbon dioxide reduction device according to claim 15,
wherein the supply member includes water absorbing sponge formed of a material having a water-absorbing property and conductivity, one end of which is immersed in the aqueous solution tank, and another end of which is extended to the electrode surface or the vicinity thereof,
wherein the aqueous solution in the aqueous solution tank absorbed by the water absorbing sponge is supplied to a surface of the electrode surface, and
wherein the conductive sponge and the water absorbing sponge are integrally formed.

17. The carbon dioxide reduction device according to claim 1, wherein the power supply device is configured to apply a pulsed high voltage of from 30 Hz to 500 Hz between the first cathode and the first anode.

18. The carbon dioxide reduction device according to claim 1, further comprising:
a second anode that is an electrode provided in the vicinity of the exhaust port; and
a second cathode that is an electrode, to which a negative voltage relative to the second anode is to be applied, which is paired with the second anode, and which is positioned on a center side of the container with respect to the second anode,
wherein the power supply device is configured to apply a voltage having a potential difference that generates corona discharge between the second cathode and the second anode, and
wherein an ion wind generated by the corona discharge generated between the second cathode and the second anode is discharged from the exhaust port together with air accelerated by the ion wind.

19. The carbon dioxide reduction device according to claim 18, wherein the second anode is an electrode having a cylindrical shape with both ends opened, and is configured to be fitted into the exhaust port.

20. The carbon dioxide reduction device according to claim 1, wherein the first anode has a water-retaining property.

21. The carbon dioxide reduction device according to claim 1, wherein, as the aqueous solution, a sodium chlorite aqueous solution or a sodium chloride aqueous solution is used.
